# EUROPÄISCHE PATENTSCHRIFT

(11) **EP 1 309 241 B1**
(45) Veröffentlichungstag und Bekanntmachung des Hinweises auf die Patenterteilung: **26.07.2006**
(21) Anmeldenummer: 01969385.2
(22) Anmeldetag: 13.07.2001
(51) Int. Cl.: A01N 47/36

(54) **Verwendung herbizider Mittel**
Use of a herbicide agent
L'utilisation d'un agent herbicide

(30) Priorität: 25.07.2000 DE 10036002
(43) Veröffentlichungstag der Anmeldung: 14.05.2003
(60) Teilanmeldung: 05015403.8
(73) Patentinhaber: Bayer CropScience GmbH, 65929 Frankfurt/Main (DE)
(72) Erfinder: BICKERS, Udo, 49835 Wietmarschen (DE); BIERINGER, Hermann, 65817 Eppstein (DE); FRISCH, Gerhard, 61273 Wehrheim (DE); HACKER, Erwin, 65239 Hochheim (DE); HUFF, Hans, Philipp, 65817 Eppstein (DE)
(86) Internationale Anmeldenummer: PCT/EP2001/008126
(87) Internationale Veröffentlichungsnummer: WO 2002/007519

(56) Entgegenhaltungen:
- EP-A- 0 402 770
- WO-A-89/02700
- WO-A-89/12394
- WO-A-91/15478
- WO-A-93/25074
- WO-A-95/02327
- WO-A-96/00010
- WO-A-98/49894
- DE-A- 3 636 994
- US-A- 4 632 693
- ANONYMOUS: "Method of controlling aquatic vegetation" RESEARCH DISCLOSURE, Nr. 21233, Dezember 1981 (1981-12), XP001022458
- DATABASE WPI Section Ch, Week 199330 Derwent Publications Ltd., London, GB; Class C02, AN 1993-239884 XP002182896 & JP 05 163106 A (TAKEDA CHEM IND LTD), 29. Juni 1993 (1993-06-29)
- S. MATSUMOTO ET AL.: "Effect of humectants on pesticide uptake through plant leaf surfaces" ADJUVANTS FOR AGROCHEMICALS, 1992, Seiten 261-271, XP001022459 CRC, Boca Raton, FLA
- G. T. COOK & H. J. DUNCAN: "Uptake of aminotriazole from humectant-surfactant combinations and the influence of humidity" PESTIC. SCI., Bd. 9, 1978, Seiten 535-544, XP001022485

## Beschreibung

Die Erfindung betrifft das technische Gebiet der Pflanzenschutzmittel, insbesondere Wirkstoff-Tensid-Humectant-Kombinationen.

Zur Bekämpfung unerwünschter Schadpflanzen stehen dem Anwender eine Vielzahl von Herbiziden zur Verfügung, die, in Abhängigkeit von den biologischen Eigenschaften der Herbizide, der Art der zu bekämpfenden Schadpflanzen und der Art der Nutzpflanzen zum Einsatz gelangen können. Dabei werden die herbiziden Wirkstoffe so zubereitet, daß sie möglichst optimal anzuwenden sind und eine hohe Wirksamkeit besitzen. Zur Anwendung kommen dabei verschiedene Formulierhilfsmittel wie Netzmittel, Dispergiermittel, Emulgatoren, Entschäumer, Lösungsmittel oder Füllstoffe.

Die Sicherheit und das Niveau der Schadpflanzenkontrolle variiert jedoch in Abhängigkeit von Umweltfaktoren wie Temperatur, Luft- und Bodenfeuchte, Lichteinstrahlung, Niederschlägen oder Bodenart, was bei Minderwirkung zu Nachbehandlungen oder bei Überdosierung Schädigung von Nutzpflanzen führen kann.

Eine höhere Wirkungssicherheit bietet auch ökologische Vorteile. Um einer Minderwirkung zu entgehen, erhöht der Anwender häufig die auszubringende Wirkstoffmenge. Diese Verhaltensweise hat jedoch den Nachteil, dass das Potential der Wirkstoffe, die Bodenfauna zu beeinflussen, im Boden zu leachen oder in Oberflächengewässer getragen zu werden, steigt.

In Adjuvants for Agrochemicals, CRC Press, Inc. (1992) S. 261 - 271 wird der Einfluß von Humectants auf verschiedene Pestizide beschrieben. Aus WO 89/02570 ist bekannt, dass Humectants in Verbindung mit bestimmten Silikontensiden die Wirksamkeit von Herbiziden steigern können.

In WO 91/15478 A1 und US 4,623,693 werden spezielle Sulfonylharnstoffe beschrieben, welche sich zur Bekämpfung verschiedener Schadpflanzen eignen.

Aufgabe der vorliegenden Erfindung war es zur Bekämpfung von Bromuspflanzen, ein herbizides Mittel mit verbessertem Wirkniveau und verbesserter Wirkungssicherheit zur Verfügung zu stellen. Diese Aufgabe wird gelöst durch die Verwendung eines speziellen herbiziden Mittels, welches herbizide Wirkstoffe der Formel (II') und/oder deren Salze, optional in Kombination mit bestimmten Tensiden und Humectants enthält.

Die vorliegende Erfindung betrifft somit die Verwendung eines herbiziden Mittel, enthaltend
a) einen oder mehrere herbizide Wirkstoffe der Formel (II') und/deren Salze, 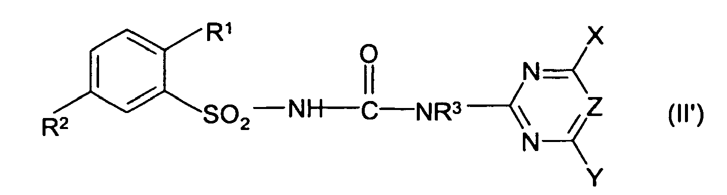 worin R¹ gleich CO-(C₁-C₄-Alkoxy) ist, R² gleich CH₂-NHR^{e} ist, worin R^{e} ein Acylrest, vorzugsweise C₁-C₄-Alkylsulfonyl ist, R³ gleich H oder C₁-C₄-Alkyl ist,
   X und Y unabhängig voneinander gleich oder verschieden C₁-C₆-Alkyl, C₁-C₆₋Alkoxy oder C₁-C₆-Alkylthio sind, wobei jeder der drei genannten Reste unsubstituiert oder durch einen oder mehrere Reste aus der Gruppe Halogen, C₁-C₄-Alkoxy und C₁-C₄-Alkylthio substituiert ist, oder C₃-C₆-Cycloalkyl, C₂-C₆₋Alkenyl,C₂-C₆-Alkynyl, C₃-C₆-Alkenyloxy oder C₃-C₆-Alkynyloxy sind, vorzugsweise C₁-C₄-Alkyl oder C₁-C₄-Alkoxy, und
   Z gleich CH oder N ist,
b) optional eines oder mehrere von Silikontensiden verschiedene Tenside, und
c) optional eines oder mehrere Humectants,
   zur Bekämpfung von Bromuspflanzen.

Beispielsweise eignen sich herbizide Mittel die Mesosulfuron-methyl und/oder dessen Salze wie das Natriumsalz enthalten (Agrow Nr. 347, 3. März 2000, Seite 22 (PJB Publications Ltd. 2000)), hervorragend zur Kontrolle von Bromusarten wie Bromus catharticus, Bromus secalinus, Bromus erectus, Bromus tectorum und Bromus japonicus.

Die erfindungsgemäß verwendeten herbiziden Mittel können neben den herbiziden Wirkstoffen a) optional von Komponente a) verschiedene ALS-Inhibitoren (Acetolactat-Synthetase-Inhibitoren) oder von ALS-Inhibitoren verschiedene Herbizide enthalten, wie Herbizide aus der Gruppe der Carbamate, Thiocarbamate, Halogenacetanilide, substituierte Phenoxy-, Naphthoxy- und Phenoxyphenoxycarbonsäure-Derivate sowie Heteroaryloxy-phenoxyalkancarbonsäure-Derivate, wie. Chinolyloxy-, Chinoxalyl-oxy-, Pyridyloxy-, Benzoxazolyloxy- und Benzthiazolyloxyphenoxyalkancarbonsäureester, Cyclo-hexandionabkömmlinge, Imidazolinone, Phosphor-haltige Herbizide, z.B. vom Glufosinate-Typ oder vom Glyphosate-Typ, Pyrimidinyloxy-pyridincarbonsäure-Derivate, Pyrimidyloxy-benzoesäure-Derivate, Triazolopyrimidin-sulfonamid-Derivate sowie S-(N-Aryl-N-alkylcarbamoylmethyl)-dithiophosphorsäureester.

Bei den von Komponente a) verschiedenen ALS-Inhibitoren handelt es sich insbesondere um Sulfonamide, vorzugsweise aus der Gruppe der Sulfonylharnstoffe, besonders bevorzugt solche mit der allgemeinen Formel (I) und/oder deren Salze,

R^{a}-SO₂-NR^{b}-CO-(NR^{c})ₓ - R^{d} (I)

R^{a} ein Kohlenwasserstoffrest, vorzugsweise ein Arylrest wie Phenyl, der unsubstituiert oder substituiert ist, oder ein heterocyclischer Rest, vorzugsweise ein Heteroarylrest wie Pyridyl, der unsubstituiert oder substituiert ist, und wobei die Reste inklusive Substituenten 1-30 C-Atome, vorzugsweise 1-20 C-Atome aufweisen, oder R^{a} eine elektronenziehende Gruppe wie ein Sulfonamidrest ist,
R^{b} ein Wasserstoffatom oder ein Kohlenwasserstoffrest ist, der unsubstituiert oder substituiert ist und inklusive Substituenten 1-10 C-Atome aufweist, z.B. unsubstituiertes oder substituiertes C₁-C₆-Alkyl, vorzugsweise ein Wasserstoffatom oder Methyl,
R^{c} ein Wasserstoffatom oder ein Kohlenwasserstoffrest ist, der unsubstituiert oder substituiert ist und inklusive Substituenten 1-10 C-Atome aufweist, z.B. unsubstituiertes oder substituiertes C₁-C₆-Alkyl, vorzugsweise ein Wasserstoffatom oder Methyl,
x gleich Null oder 1 ist, und
R^{d} ein heterocyclischer Rest ist.

Besonders bevorzugte von Komponente a) verschiedene ALS-Inhibitoren sind Sulfonylharnstoffe der Formel (II) und/oder deren Salze, 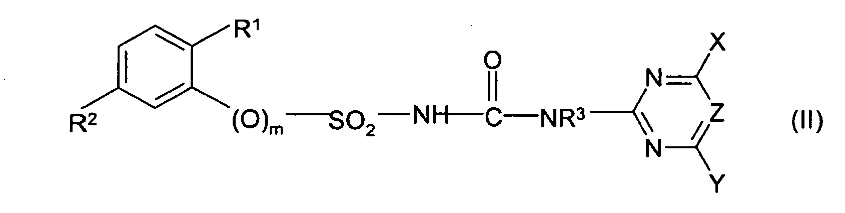 worin
- R¹: C₁-C₄-Alkoxy, vorzugsweise C₂-C₄-Alkoxy, oder CO-R^{a} ist, worin R^{a} gleich OH, C₁-C₄-Alkoxy oder NR^{b}R^{c} ist, worin R^{b} und R^{c} unabhängig voneinander gleich oder verschieden H oder C₁-C₄-Alkyl sind,
- R²: Halogen oder (A)ₙ-NR^{d}R^{e} ist, worin n gleich Null oder 1 ist, A eine Gruppe CR'R" ist, worin R' und R" unabhängig voneinander gleich oder verschieden H oder C₁-C₄-Alkyl sind, R^{d} gleich H oder C₁-C₄-Alkyl ist und R^{e} ein Acyl-Rest wie Formyl oder C₁-C₄-Alkyl-Sulfonyl ist, und R² für den Fall, daß R¹ gleich C₁₋C₄-Alkoxy, vorzugsweise C₂-C₄-Alkoxy, bedeutet auch H sein kann,
- R³: H oder C₁-C₄-Alkyl ist,
- m: gleich Null oder 1, vorzugsweise Null ist,
- X und Y: unabhängig voneinander gleich oder verschieden C₁-C₆-Alkyl, C₁-C₆-Alkoxy oder C₁-C₆-Alkylthio sind, wobei jeder der drei genannten Reste unsubstituiert oder durch einen oder mehrere Reste aus der Gruppe Halogen, C₁-C₄-Alkoxy und C₁-C₄-Alkylthio substituiert ist, oder C₃-C₆-Cycloalkyl, C₂-C₆-Alkenyl, C₂-C₆-Alkynyl, C₃-C₆-Alkenyloxy oder C₃-C₆-Alkynyloxy sind, vorzugsweise C₁-C₄-Alkyl oder C₁-C₄-Alkoxy, und
- Z: gleich CH oder N ist.

Bevorzugte Sulfonylharnstoffe der allgemeinen Formel (II) und/oder deren Salze sind solche, worin
- m: gleich Null ist, und

a) R¹ gleich CO-(C₁-C₄-Alkoxy) ist und R² gleich Halogen, vorzugsweise Jod ist, oder
b) R¹ gleich CO-N(C₁-C₄-Alkyl)₂ und R² gleich NHR^{e} ist, worin R^{e} ein Acylrest, vorzugsweise Formyl ist.

Ein Kohlenwasserstoffrest im Sinne dieser Beschreibung ist ein geradkettiger, verzweigter oder cyclischer und gesättigter oder ungesättigter aliphatischer oder aromatischer Kohlenwasserstoffrest, z.B. Alkyl, Alkenyl, Alkinyl, Cycloalkyl, Cycloalkenyl oder Aryl; Aryl bedeutet dabei ein mono-, bi- oder polycyclisches aromatisches System, beispielsweise Phenyl, Naphthyl, Tetrahydronaphthyl, Indenyl, Indanyl, Pentalenyl, Fluorenyl und ähnliches, vorzugsweise Phenyl. Ein Kohlenwasserstoffrest weist bevorzugt 1 bis 40 C-Atome, vorzugsweise 1 bis 30 C-Atome auf; besonders bevorzugt bedeutet ein Kohlenwasserstoffrest Alkyl, Alkenyl oder Alkinyl mit bis zu 12 C-Atomen oder Cycloalkyl mit 3, 4, 5, 6 oder 7 Ringatomen oder Phenyl.

Ein heterocyclischer Rest oder Ring (Heterocyclyl) im Sinne dieser Beschreibung kann gesättigt, ungesättigt oder heteroaromatisch und unsubstituiert oder substituiert sein; er enthält vorzugsweise ein oder mehrere Heteroatome im Ring, vorzugsweise aus der Gruppe N, O und S; vorzugsweise ist er ein aliphatischer Heterocyclylrest mit 3 bis 7 Ringatomen oder ein heteroaromatischer Rest mit 5 oder 6 Ringatomen und enthält 1, 2 oder 3 Heteroatome. Der heterocyclische Rest kann z.B. ein heteroaromatischer Rest oder Ring (Heteroaryl) sein, wie z.B. ein mono-, bi- oder polycyclisches aromatisches System, in dem mindestens 1 Ring ein oder mehrere Heteroatome enthält, beispielsweise Pyridyl, Pyrimidinyl, Pyridazinyl, Pyrazinyl, Triazinyl, Thienyl, Thiazolyl, Oxazolyl, Furyl, Pyrrolyl, Pyrazolyl und Imidazolyl, oder ist ein partiell oder vollständig hydrierter Rest wie Oxiranyl, Oxetanyl, Pyrrolidyl, Piperidyl, Piperazinyl, Dioxolanyl, Morpholinyl, Tetrahydrofuryl. Als Substituenten für einen substituierten heterocyclischen Rest kommen die weiter unten genannten Substituenten in Frage, zusätzlich auch Oxo. Die Oxogruppe kann auch an den Heteroringatomen, die in verschiedenen Oxidationsstufen existieren können, z.B. bei N und S, auftreten.

Substituierte Reste im Sinne dieser Beschreibung, wie substituierte Kohlenwasserstoffreste, z.B. substituiertes Alkyl, Alkenyl, Alkinyl oder Aryl wie Phenyl und Benzyl, oder substituiertes Heterocyclyl, bedeuten beispielsweise einen vom unsubstituierten Grundkörper abgeleiteten substituierten Rest, wobei die Substituenten beispielsweise einen oder mehrere, vorzugsweise 1, 2 oder 3 Reste aus der Gruppe Halogen (Fluor, Chlor, Brom, Jod), Alkoxy, Haloalkoxy, Alkylthio, Hydroxy, Amino, Nitro, Carboxy, Cyano, Azido, Alkoxycarbonyl, Alkylcarbonyl, Formyl, Carbamoyl, Mono- und Dialkylaminocarbonyl, substituiertes Amino, wie Acylamino, Mono- und Dialkylamino, und Alkylsulfinyl, Haloalkylsulfinyl, Alkylsulfonyl, Haloalkylsulfonyl und, im Falle cyclischer Reste, auch Alkyl und Haloalkyl sowie den genannten gesättigten kohlenwasserstoffhaltigen Resten entsprechende ungesättigte aliphatische Reste, wie Alkenyl, Alkinyl, Alkenyloxy, Alkinyloxy etc. bedeuten. Bei Resten mit C-Atomen sind solche mit 1 bis 4 C-Atomen, insbesondere 1 oder 2 C-Atomen, bevorzugt. Bevorzugt sind in der Regel Substituenten aus der Gruppe Halogen, z.B. Fluor und Chlor, (C₁-C₄)Alkyl, vorzugsweise Methyl oder Ethyl, (C₁-C₄)Haloalkyl, vorzugsweise Trifluormethyl, (C₁-C₄)Alkoxy, vorzugsweise Methoxy oder Ethoxy, (C₁-C₄)Haloalkoxy, Nitro und Cyano.

Ein Acylrest im Sinne dieser Beschreibung bedeutet den Rest einer organischen Säure, der formal durch Abspaltung einer OH-Gruppe aus der organischen Säure entsteht, z.B. der Rest einer Carbonsäure und Reste davon abgeleiteter Säuren wie der Thiocarbonsäure, gegebenenfalls N-substituierten Iminocarbonsäuren oder die Reste von Kohlensäuremonoestern, gegebenenfalls N-substituierter Carbaminsäuren, Sulfonsäuren, Sulfinsäuren, Phosphonsäuren, Phosphinsäuren.

Ein Acylrest ist bevorzugt Formyl oder Acyl aus der Gruppe CO-R^{x}, CS-R^{x}, CO-OR^{x}, CS-OR^{x}, CS-SR^{x}, SOR^{Y} oder SO₂R^{Y}, wobei R^{x} und R^{Y} jeweils einen C₁-C₁₀₋Kohlenwasserstoffrest wie C₁-C₁₀-Alkyl oder C₆-C₁₀-Aryl bedeuten, der unsubstituiert oder substituiert ist, z.B. durch einen oder mehrere Substituenten aus der Gruppe Halogen wie F, Cl, Br, I, Alkoxy, Haloalkoxy, Hydroxy, Amino, Nitro, Cyano oder Alkylthio, oder R^{X} und R^{Y} bedeuten Aminocarbonyl, oder Aminosulfonyl, wobei die beiden letztgenannten Reste unsubstituiert, N-monosubstituiert oder N,N-disubstituiert sind, z.B. durch Substituenten aus der Gruppe Alkyl oder Aryl. Acyl bedeutet beispielsweise Formyl, Halogenalkylcarbonyl, Alkylcarbonyl wie (C₁-C₄)Alkylcarbonyl, Phenylcarbonyl, wobei der Phenylring substituiert sein kann, oder Alkyloxycarbonyl, wie (C₁-C₄) Alkyloxycarbonyl, Phenyloxycarbonyl, Benzyloxycarbonyl, Alkylsulfonyl, wie (C₁-C₄) Alkylsulfonyl, Alkylsulfinyl, wie C₁₋C₄(Alkylsulfinyl), N-Alkyl-1-iminoalkyl, wie N-(C₁-C₄)-1-imino-(C₁-C₄)alkyl und andere Reste von organischen Säuren.

Unter den in den erfindungsgemäßen herbiziden Mitteln als Komponente a) enthaltenen Wirkstoffen aus der Gruppe der ALS-Inhibitoren wie Sulfonylharnstoffe sind im Sinne der vorliegenden Erfindung neben den neutralen Verbindungen stets auch deren Salze mit anorganischen und/oder organischen Gegenionen zu verstehen.

So können z.B. Sulfonylharnstoffe Salze bilden, bei denen der Wasserstoff der -SO₂-NH-Gruppe durch ein für die Landwirtschaft geeignetes Kation ersetzt ist. Diese Salze sind beispielsweise Metallsalze, insbesondere Alkalimetallsalze oder Erdalkalimetallsalze, insbesondere Natrium- und Kaliumsalze, oder auch Ammoniumsalze oder Salze mit organischen Aminen. Ebenso kann Salzbildung durch Anlagerung einer Säure an basischen Gruppen, wie z.B. Amino und Alkylamino, erfolgen. Geeignete Säuren hierfür sind starke anorganische und organische Säuren, beispielsweise HCl, HBr, H₂SO₄ oder HNO₃.

Bevorzugte ALS-Inhibitoren entstammen aus der Reihe der Sutfonytharnstoffe, z.B. Pyrimidin- oder Triazinylaminocarbonyl-[benzol-, pyridin-, pyrazol-, thiophen- und (alkylsulfonyl)-alkylamino-]-sulfamide. Bevorzugt als Substituenten am Pyrimidinring oder Triazinring sind Alkoxy, Alkyl, Haloalkoxy, Haloalkyl, Halogen oder Dimethylamino, wobei alle Substituenten unabhängig voneinander kombinierbar sind. Bevorzugte Substituenten im Benzol-, Pyridin-, Pyrazol-, Thiophen- oder (Alkylsulfonyl)-alkylamino-Teil sind Alkyl, Alkoxy, Halogen wie F, Cl, Br oder J, Amino, Alkylamino, Dialkylamino, Acylamino wie Formylamino, Nitro, Alkoxycarbonyl, Aminocarbonyl, Alkylaminocarbonyl, Dialkylaminocarbonyl, Alkoxyaminocarbonyl, Halogenalkoxy, Halogenalkyl, Alkylcarbonyl, Alkoxyalkyl, Alkylsulfonylaminoalkyl, (Alkansulfonyl)alkylamino. Solche geeigneten Sulfonylharnstoffe sind beispielsweise
A1) Phenyl- und Benzylsulfonylharnstoffe und verwandte Verbindungen, z.B. 1-(2-Chlorphenylsulfonyl)-3-(4-methoxy-6-methyl-1,3,5-triazin-2-yl)hamstoff (Chlorsulfuron),
   1-(2-Ethoxycarbonylphenylsulfonyl)-3-(4-chlor-6-methoxypyrimidin-2-yl)harnstoff (Chlorimuron-ethyl),
   1-(2-Methoxyphenylsulfonyl)-3-(4-methoxy-6-methyl-1,3,5-triazin-2-yl)harnstoff (Metsulfuron-methyl),
   1-(2-Chlorethoxyphenylsulfonyl)-3-(4-methoxy-6-methyl-1,3,5-triazin-2-yl)harn-stoff (Triasulfuron),
   1-(2-Methoxycarbonylphenylsulfonyl)-3-(4,6-dimethylpyrimidin-2-yl)harnstoff (Sulfumeturon-methyl),
   1-(2-Methoxycarbonylphenylsulfonyl)-3-(4-methoxy-6-methyl-1,3,5-triazin-2-yl)-3-methylharnstoff (Tribenuron-methyl),
   1-(2-Methoxycarbonylbenzylsulfonyl)-3-(4,6-dimethoxypyrimidin-2-yl)harnstoff (Bensulfuron-methyl),
   1-(2-Methoxycarbonylphenylsulfonyl)-3-(4,6-bis-(difluormethoxy)pyrimidin-2-yl)harnstoff, (Primisulfuron-methyl),
   3-(4-Ethyl-6-methoxy-1,3,5-triazin-2-yl)-1-(2,3-dihydro-1,1-dioxo-2-methylbenzo-[b]thiophen-7-sulfonyl)harnstoff (EP-A 0 796 83),
   3-(4-Ethoxy-6-ethyl-1,3,5-triazin-2-yl)-1-(2,3-dihydro-1,1-dioxo-2-methylbenzo[b]-thiophen-7-sulfonyl)harnstoff (EP-A 0 079 683),
   3-(4-Methoxy-6-methyl-1,3,5-triazin-2-yl)-1-(2-methoxycarbonyl-5-jod-phenylsulfonyl)-harnstoff (lodosulfuron-methyl und dessen Natriumsalz, WO 92/13845), DPX-66037, Triflusulfuron-methyl (s. Brighton Crop Prot. Conf. - Weeds - 1995, S. 853),
   CGA-277476, (s. Brighton Crop Prot. Conf. - Weeds - 1995, S. 79),
   Methyl-2-[3-(4,6-dimethoxypyrimidin-2-yl)ureidosulfonyl]-4-methansulfon-amidomethyl-benzoat (Mesosulfuron-methyl und dessen Natriumsalz, WO 95/10507),
   N,N-Dimethyl-2-[3-(4,6-dimethoxypyrimidin-2-yl)ureidosulfonyl]-4-formylaminobenzamid (Foramsulfuron und dessen Natriumsalz, WO 95/01344);
A2) Thienylsulfonylharnstoffe, z.B.
   1-(2-Methoxycarbonylthiophen-3-yl)-3-(4-methoxy-6-methyl-1,3,5-triazin-2-yl)harnstoff (Thifensulfuron-methyl);
A3) Pyrazolylsulfonylharnstoffe, z.B.
   1-(4-Ethoxycarbonyl-1-methylpyrazol-5-yl-sulfonyl)-3-(4,6-d imethoxypyrim id in-2-yl)harnstoff (Pyrazosulfuron-methyl);
   Methyl-3-chlor-5-(4,6-dimethoxypyrimidin-2-ylcarbamoylsulfamoyl)-1-methyl-pyrazol-4-carboxylat (EP-A 0 282 613);
   5-(4,6-Dimethylpyrimidin-2-yl-carbamoylsulfamoyl)-1-(2-pyridyl)-pyrazol-4-carbonsäuremethylester (NC-330, s. Brighton Crop Prot. Conference'Weeds' 1991, Vol. 1, S. 45 ff.),
   DPX-A8947, Azimsulfuron, (s. Brighton Crop Prot. Conf. 'Weeds' 1995, S. 65);
A4) Sulfondiamid-Derivate, z.B.
   3-(4,6-Dimethoxypyrimidin-2-yl)-1-(N-methyl-N-methylsulfonylaminosulfonyl)-harnstoff (Amidosulfuron) und dessen Strukturanaloge (EP-A 0 131 258 und Z. Pfl. Krankh. Pfl. Schutz, Sonderheft XII, 489-497 (1990));
A5) Pyridylsulfonylhamstoffe, z.B.
   1-(3-N,N-Dimethylaminocarbonylpyridin-2-ylsulfonyl)-3-(4,6-dimethoxypyrimidin-2-yl)harnstoff (Nicosulfuron),
   1-(3-Ethylsulfonylpyridin-2-ylsulfonyl)-3-(-(4,6-dimethoxypyrimidin-2-yl)harnstoff (Rimsulfuron),
   2-[3-(4,6-Dimethoxypyrimidin-2-yl)ureidosulfonyl]-6-trifluormethyl-3-pyridincarbonsäuremethylester, Natriumsalz (DPX-KE 459, Flupyrsulfuron, s. Brighton Crop Prot. Conf. Weeds, 1995, S. 49),
   Pyridylsulfonylharnstoffe, wie sie z.B. in DE-A 40 00 503 und DE-A 40 30 577 beschrieben sind, vorzugsweise solche der Formel 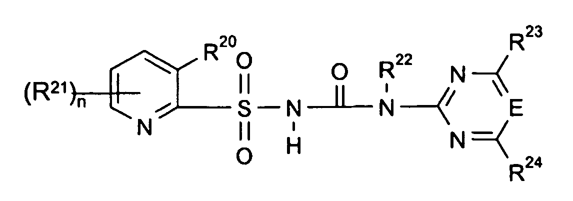 worin
   - E: CH oder N, vorzugsweise CH,
   - R²⁰: Jod oder NR²⁵R²⁶,
   - R²¹: Wasserstoff, Halogen, Cyano, (C₁-C₃)-Alkyl, (C₁-C₃)-Alkoxy, (C₁-C₃)-Halogenalkyl, (C₁-C₃)-Halogenalkoxy, (C₁-C₃)-Alkylthio, (C₁-C₃)-Alkoxy-(C₁₋C₃)-alkyl, (C₁-C₃)-Alkoxy-carbonyl, Mono- oder Di-((C₁-C₃)-alkyl)-amino, (C₁₋C₃)-Alkylsulfinyl oder -sulfonyl, SO₂-NR^{x}R^{y} oder CO-NR^{x}R^{y}, insbesondere Wasserstoff,
   - R^{x}, R^{y}: unabhängig voneinander Wasserstoff, (C₁-C₃)-Alkyl, (C₁-C₃)-Alkenyl, (C₁-C₃)-Alkinyl oder zusammen -(CH₂)₄-, -(CH₂)₅- oder -(CH₂)₂-O-(CH₂)₂-,
   - n: 0,1,2 oder 3, vorzugsweise 0 oder 1 ist,
   - R²²: Wasserstoff oder CH₃,
   - R²³: Halogen, (C₁-C₂)-Alkyl, (C₁-C₂)-Alkoxy, (C₁-C₂)-Halogenalkyl, insbesondere CF₃, (C₁-C₂)-Halogenalkoxy, vorzugsweise OCHF₂ oder OCH₂CF₃,
   - R²⁴: (C₁-C₂)-Alkyl, (C₁-C₂)-Halogenalkoxy, vorzugsweise OCHF₂, oder (C₁-C₂)-Alkoxy,
   - R²⁵: (C₁-C₄)-Alkyl,
   - R²⁶: (C₁-C₄)-Alkylsulfonyl oder
   - R²⁵ und R²⁶: gemeinsam eine Kette der Formel -(CH₂)₃SO₂- oder -(CH₂)₄SO₂₋bedeuten, z.B. 3-(4,6-Dimethoxypyrimiden-2-yl)-1-(3-N-methylsulfonyl-N-methylaminopyridin-2-yl)-sulfonylharnstoff, oder deren Salze;
A6) Alkoxyphenoxysulfonylharnstoffe, wie sie z.B. in EP-A 0 342 569 beschrieben sind, vorzugsweise solche der Formel 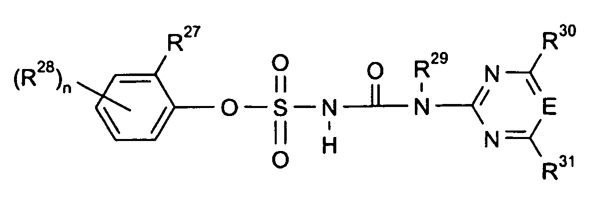 worin
   - E: CH oder N, vorzugsweise CH,
   - R²⁷: Ethoxy, Propoxy oder Isopropoxy,
   - R²⁸: Halogen, NO₂, CF₃, CN, (C₁-C₄)-Alkyl, (C₁-C₄)-Alkoxy, (C₁-C₄)-Alkylthio oder (C₁-C₃)-Alkoxy)-carbonyl, vorzugsweise in 6-Position am Phenylring,
   - n: 0, 1, 2 oder 3, vorzugsweise 0 oder 1,
   - R²⁹: Wasserstoff, (C₁-C₄)-Alkyl oder (C₃-C₄)-Alkenyl,
   - R³⁰, R³¹: unabhängig voneinander Halogen, (C₁-C₂)-Alkyl, (C₁-C₂)-Alkoxy, (C₁-C₂)-Halogenalkyl, (C₁-C₂)-Halogenalkoxy oder (C₁-C₂)-Alkoxy-(C₁-C₂)-alkyl, vorzugsweise OCH₃ oder CH₃, bedeuten, z.B. 3-(4,6-Dimethoxypyrimidin-2-yl)-1-(2-ethoxyphenoxy)-sulfonylharnstoff, oder deren Salze;
A7) Imidazolylsulfonylharnstoffe, z.B.
   MON 37500, Sulfosulfuron (s. Brighton Crop Prot. Conf. 'Weeds', 1995, S: 57), und andere verwandte Sulfonylharnstoff-Derivate und Mischungen daraus.

Typische Vertreter dieser Wirkstoffe sind unter anderem die nachfolgend aufgeführten Verbindungen: Amidosulfuron, Azimsulfuron, Bensulfuron-methyl, Chlorimuron-Ethyl, Chlorsulfuron, Cinosulfuron, Cyclosulfamuron, Ethametsulfuronmethyl, Ethoxysulfuron, Flazasulfuron, Flupyrsulfuron-Methyl-Natrium, Halosulfuron-Methyl, Imazosulfuron, Metsulfuron-Methyl, Nicosulfuron, Oxasulfuron, Primisulfuron-Methyl, Prosulfuron, Pyrazosulfuron-Ethyl, Rimsulfuron, Sulfometuron-Methyl, Sulfosulfuron, Thifensulfuron-Methyl, Triasulfuron, Tribenuron-Methyl, Triflusulfuron-Methyl, lodosulfuron-Methyl und dessen Natriumsalz (WO 92/13845), und Foramsulfuron und dessen Natriumsalz (Agrow Nr. 338, 15. Oktober 1999, Seite 26 (PJB Publications Ltd. 1999)).

Die vorstehend aufgeführten Wirkstoffe sind z.B. bekannt aus "The Pesticide Manual", 12. Auflage (2000), The British Crop Protection Council oder den nach den einzelnen Wirkstoffen aufgeführten Literaturstellen.

Bei den in den erfindungsgemäßen herbiziden Mitteln enthaltenen von ALS-Inhibitoren verschiedenen herbiziden Wirkstoffen handelt es sich z.B. Herbizide aus der Gruppe der Carbamate, Thiocarbamate, Halogenacetanilide, substituierte Phenoxy-, Naphthoxy- und Phenoxyphenoxycarbonsäure-Derivate sowie Heteroaryloxy-phenoxyalkancarbonsäure-Derivate, wie Chinolyloxy-, Chinoxalyl-oxy-, Pyridyloxy-, Benzoxazolyloxy- und Benzthiazolyloxyphenoxyalkancarbonsäureester, Cyclo-hexandionabkömmlinge, Imidazolinone, Phosphor-haltige Herbizide, z.B. vom Glufosinate-Typ oder vom Glyphosate-Typ, Pyrimidinyloxy-pyridincarbonsäure-Derivate, Pyrimidyloxy-benzoesäure-Derivate, Triazolopyrimidin-sulfonamid-Derivate sowie S-(N-Aryl-N-alkylcarbamoylmethyl)-dithiophosphorsäureester. Bevorzugt sind dabei Phenoxyphenoxy- und Heteroaryloxyphenoxycarbonsäureester und -salze, Imidazolinone sowie Herbizide wie Bentazon, Cyanazin, Atrazin, Dicamba oder Hydroxybenzonitrile wie Bromoxynil und loxynil und andere Blattherbizide.

Geeignete von ALS-Inhibitoren verschiedene herbizide Wirkstoffe a), die in den erfindungsgemäßen herbiziden Mitteln als Komponente a) enthalten sein können, sind beispielsweise:
B) Herbizide vom Typ der Phenoxyphenoxy- und Heteroaryloxyphenoxycarbonsäure-Derivate, wie
   B1) Phenoxyphenoxy- und Benzyloxyphenoxy-carbonsäure-Derivate, z.B. 2-(4-(2,4-Dichlorphenoxy)-phenoxy)-propionsäuremethylester (Diclofop-methyl), 2-(4-(4-Brom-2-chlorphenoxy)phenoxy)propionsäuremethylester (DE-A 26 01 548), 2-(4-(4-Brom-2-fluorphenoxy)phenoxy)propionsäuremethylester (US-A 4,808,750), 2-(4-(2-Chlor-4-trifluormethylphenoxy)phenoxy)propionsäuremethylester (DE-A 24 33 067),
      2-(4-(2-Fluor-4-trifluormethylphenoxy)phenoxy)propionsäuremethylester (US-A 4,808,750),
      2-(4-(2,4-Dichlorbenzyl)phenoxy)propionsäuremethylester (DE-A 24 17 487), 4-(4-(4-Trifluormethylphenoxy)phenoxy)pent-2-en-säureethylester,
      2-(4-(4-Trifluormethylphenoxy)phenoxy)propionsäuremethylester (DE-A 24 33 067);
   B2) "Einkernige" Heteroaryloxyphenoxy-alkancarbonsäure-Derivate, z.B.
      2-(4-(3,5-Dichlorpyridyl-2-oxy)phenoxy)propionsäureethylester (EP-A 0 002 925),
      2-(4-(3,5-Dichlorpyridyl-2-oxy)phenoxy)propionsäurepropargylester (EP-A 0 003 114),
      2-(4-(3-Chlor-5-trifluormethyl-2-pyridyloxy)phenoxy)propionsäure-methylester (EP-A 0 003 890),
      2-(4-(3-Chlor-5-trifluormethyl-2-pyridyloxy)phenoxy)propionsäureethylester (EP-A 0 003 890),
      2-(4-(5-Chlor-3-fluor-2-pyridyloxy)phenoxy)propionsäurepropargylester (EP-A 0 191 736),
      2-(4-(5-Trifluormethyl-2-pyridyloxy)phenoxy)propionsäurebutylester (Fluazifop-butyl);
   B3) "Zweikernige" Heteroaryloxyphenoxy-alkancarbonsäure-Derivate, z.B.
      2-(4-(6-Chlor-2-chinoxalyloxy)phenoxy)propionsäuremethylester und -ethylester (Quizalofopmethyl und Quizalofopethyl),
      2-(4-(6-Fluor-2-chinoxalyloxy)phenoxy)propionsäuremethylester (s. J. Pest. Sci. Vol. 10, 61 (1985)),
      2-(4-(6-Chlor-2-chinoxalyloxy)phenoxy)propionsäure-2-isopropylidenaminooxyethylester (Propaquizafop),
      2-(4-(6-Chlorbenzoxazol-2-yl-oxy)phenoxy)propionsäureethylester (Fenoxapropethyl), dessen D(+) Isomer (Fenoxaprop-P-ethyl) und 2-(4-(6-Chlorbenzthiazol-2-yloxy)phenoxy)propionsäureethylester (DE-A 26 40 730), 2-(4-(6-Chlorchinoxalyloxy)phenoxy)propionsäure-tetrahydro-2-furylmethylester (EP-A 0 323 727);
C) Chloracetanilide, z.B.
   N-Methoxymethyl-2,6-diethyl-chloracetanilid (Alachlor),
   N-(3-Methoxyprop-2-yl)-2-methyl-6-ethyl-chloracetanilid (Metolachlor),
   N-(3-Methyl-1,2,4-oxadiazol-5-yl-methyl)-chloressigsäure-2,6-dimethylanilid,
   N-(2,6-Dimethylphenyl)-N-(1-pyrazolylmethyl)-chloressigsäureamid (Metazachlor);
D) Thiocarbamate, z.B.
   S-Ethyl-N,N-dipropylthiocarbamat (EPTC),
   S-Ethyl-N,N-diisobutylthiocarbamat (Butylate);
E) Cyclohexandionoxime, z.B.
   3-(1-Allyloxyiminobutyl)-4-hydroxy-6,6-dimethyl-2-oxocyclohex-3-encarbonsäuremethylester, (Alloxydim),
   2-(1-Ethoxyiminobutyl)-5-(2-ethylthiopropyl)-3-hydroxy-cyclohex-2-en-1-on (Sethoxydim),
   2-(1-Ethoxyiminobutyl)-5-(2-phenylthiopropyl)-3-hydroxy-cyclohex-2-en-1-on (Cloproxydim),
   2-(1-(3-Chlorallyloxy)iminobutyl)-5-(2-ethylthiopropyl)-3-hydroxy-cyclohex-2-en-1-on,
   2-(1-(3-Chlorallyloxy)iminopropyl)-5-(2-ethylthiopropyl)-3-hydroxy-cyclohex-2-en-1-on (Clethodim),
   2-(1-Ethoxyiminobutyl)-3-hydroxy-5-(thian-3-yl)-cyclohex-2-enon (Cycloxydim),
   2-(1-Ethoxyiminopropyl)-5-(2,4,6-trimethylphenyl)-3-hydroxy-cyclohex-2-en-1-on (Tralkoxydim);
F) Imidazolinone, z.B.
   2-(4-Isopropyl-4-methyl-5-oxo-2-imidazolin-2-yl)-5-methylbenzoesäure-methylester und 2-(4-Isopropyl-4-methyl-5-oxo-2-imidazolin-2-yl)-4-methylbenzoesäure (Imazamethabenz),
   5-Ethyl-2-(4-isopropyl-4-methyl-5-oxo-2-imidazolin-2-yl)-pyridin-3-carbonsäure (Imazethapyr),
   2-(4-Isopropyl-4-methyl-5-oxo-2-imidazolin-2-yl)-chinolin-3-carbonsäure (Imazaquin), 2-(4-Isopropyl-4-methyl-5-oxo-2-imidazolin-2-yl)-pyridin-3-carbonsäure (Imazapyr),
   5-Methyl-2-(4-isopropyl-4-methyl-5-oxo-2-imidazolin-2-yl)-pyridin-3-carbonsäure (Imazethamethapyr);
G) Triazolopyrimidinsulfonamid-Derivate, z.B.
   N-(2,6-Difluorphenyl)-7-methyl-1,2,4-triazolo[1,5-c]pyrimidin-2-sulfonamid (Flumetsulam),
   N-(2,6-Dichlor-3-methylphenyl)-5,7-dimethoxy-1,2,4-triazolo[1;5-c]pyrimidin-2-sulfonamid,
   N-(2,6-Difluorphenyl)-7-fluor-5-methoxy-1,2,4-triazolo[1,5-c]pyrimidin-2-sulfonamid,
   N-(2,6-Dichlor-3-methylphenyl)-7-chlor-5-methoxy-1,2,4-triazolo[1,5-c]pyrimidin-2-sulfonamid,
   N-(2-Chlor-6-methoxycarbonyl)-5,7-dimethyl-1,2,4-triazolo[1,5-c]pyrimidin-2-sulfonamid (EP-A 0 343 752, US-A 4,988,812);
H) Benzoylcyclohexandione, z.B.
   2-(2-Chlor-4-methylsulfonylbenzoyl)-cyclohexan-1,3-dion (SC-0051, EP-A 0 137 963), 2-(2-Nitrobenzoyl)-4,4-dimethyl-cyclohexan-1,3-dion (EP-A 0 274 634),
   2-(2-Nitro-3-methylsulfonylbenzoyl)-4,4-dimethylcyclohexan-1,3-dion (WO 91/13548);
I) Pyrimidinyloxy-pyridincarbonsäure- bzw. Pyrimidinyloxybenzoesäure-Derivate, z.B.
   3-(4,6-Dimethoxypyrimidin-2-yl)-oxy-pyridin-2-carbonsäurebenzyl-ester (EP-A 0 249 707),
   3-(4,6-Dimethoxypyrimidin-2-yl)-oxy-pyridin-2-carbonsäuremethylester (EP-A 0 249 707),
   2,6-Bis[(4,6-dimethoxypyrimidin-2-yl)-oxy]-benzoesäure (EP-A 0 321 846),
   2,6-Bis[(4,6-dimethoxypyrimidin-2-yl)-oxy]-benzoesäure-1-(ethoxycarbonyl-oxyethyl)-ester (EP-A 0 472 113);
J) S-(N-Aryl-N-alkyl-carbamoylmethyl)-dithiophosphonsäureester, wie S-[N-(4-Chlorphenyl)-N-isopropyl-carbamoylmethyl]-O,O-dimethyl-dithiophosphat (Anilophos).
K) Alkylazine, z.B. wie beschrieben in WO-A 97/08156, WO-A-97/31904, DE-A-19826670, WO-A-98/15536, WO-A-8/15537, WO-A-98/15538, WO-A-98/15539 sowie auch DE-A-19828519, WO-A-98/34925, WO-A-98/42684, WO-A-99/18100, WO-A-99/19309, WO-A-99/37627 und WO-A-99/65882, vorzugsweise solche der Formel (E) 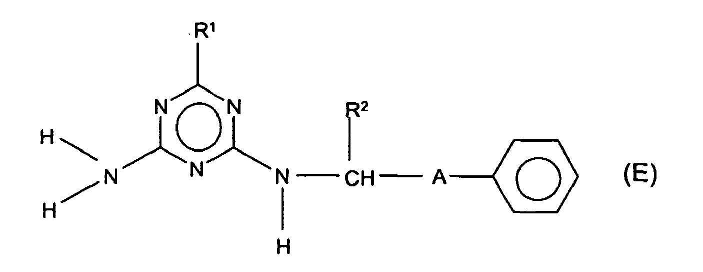 worin
   - R¹: (C₁-C₄)-Alkyl oder (C₁-C₄)-Haloalkyl;
   - R²: (C₁-C₄)-Alkyl, (C₃-C₆)-Cycloalkyl oder (C₃-C₆)Cycloalkyl-(C₁-C₄)-Alkyl und
   - A: -CH₂-, -CH₂-CH₂-, -CH₂-CH₂-CH₂-, -O-, -CH₂₋CH₂-O-, -CH₂-CH₂-CH₂-O-
   bedeuten, besonders bevorzugt solche der Formel E1-E7 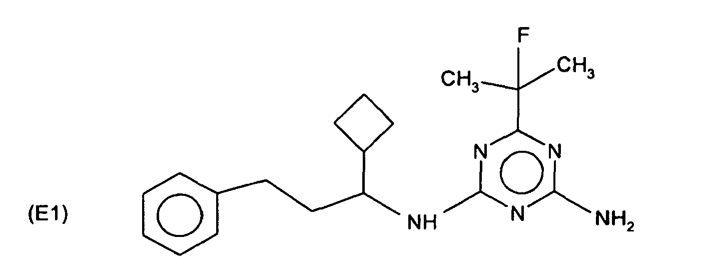 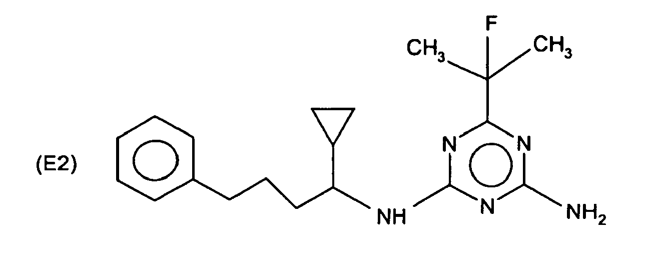 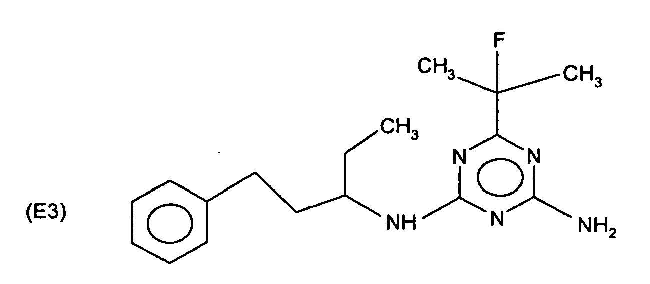 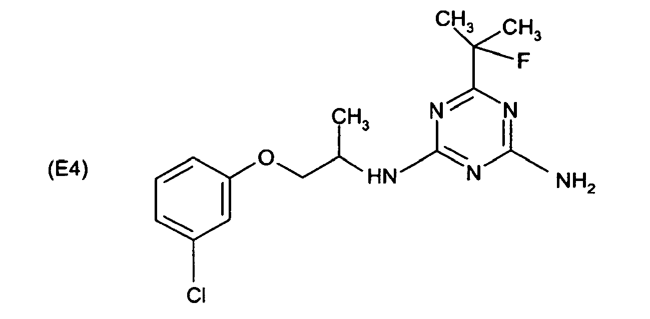 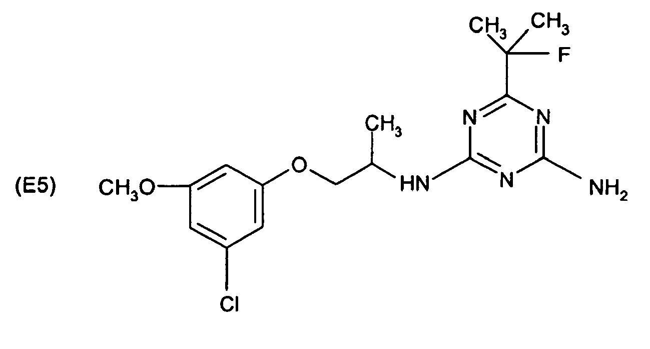 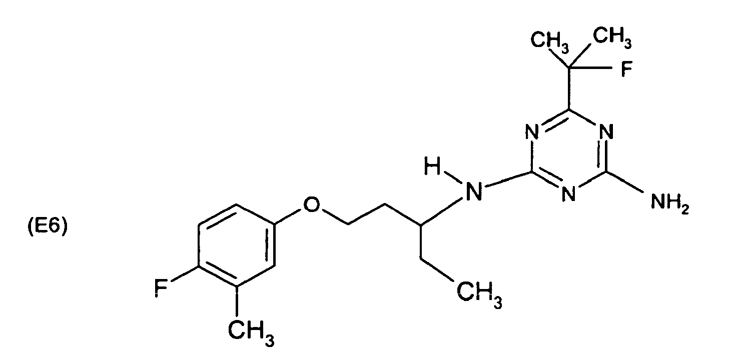 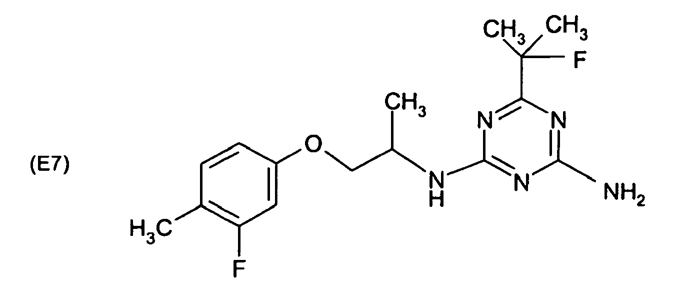
L) Phosphor-haltige Herbizide, z.B. vom Glusosinate-Typ wie Glufosinate im engeren Sinne, d. h. D,L-2-Amino-4-[hydroxy(methyl)phosphinyl]-,butansäure, Glufosinate-monoammoniumsalz, L-Glufosinate, L- oder (2S)-2-Amino-4-[hydroxy(methyl)phosphinyl]-butansäure, L-Glufosinate-monoammoniumsalz oder Bialaphos (oder Bilanafos), d.h. L-2-Amino-4-[hydroxy(methyl)phosphinyl]-butanoyl-L-alanyl-L-alanin, insbesondere dessen Natriumsalz,
   oder vom Glyphosate-Typ wie Glyphosate, d. h. N-(Phosphonomethyl)-glycin, Glyphosate-monoisopropylammoniumsalz, Glyphosate-natriumsalz, oder Sulfosate, d. h. N-(Phosphonomethyl)-glycin-trimesiumsalz = N-(Phosphonomethyl)-glycintrimethylsulfoxoniumsalz.

Die Herbizide der Gruppen B bis L sind beispielsweise aus den oben jeweils genannten Schriften und aus "The Pesticide Manual", 12. Auflage, 2000, The British Crop Protection Council, "Agricultural Chemicals Book II- Herbicides -", by W.T. Thompson, Thompson Publications, Fresno CA, USA 1990 und "Farm Chemicals Handbook '90", Meister Publishing Company, Willoughby OH, USA,1990, bekannt.

Die in den erfindungsgemäß verwendeten herbiziden Mitteln optional enthaltenen Tenside b) sind verschieden von Silikontensiden. Silikontenside sind Tenside, die mindestens ein Siliziumatom enthalten und sind z.B. beschrieben in WO 89/12394. Die in den erfindungsgemäßen herbiziden Mitteln als Tenside b) enthaltenen Tenside können ionischer und nichtionischer Art sein, wie Tenside auf Aromatenbasis, z.B. oberflächenaktive mit einer oder mehreren Alkylgruppen substituierte und nachfolgend derivatisierte Benzole oder Phenole, oder Tenside auf nichtaromatischer Basis, z.B. auf Heterocyclen-, Olefin-, Aliphaten- oder Cycloaliphatenbasis, beispielsweise oberflächenaktive mit einer oder mehreren Alkylgruppen substituierte und nachfolgend derivatisierte Pyridin-, Pyrimidin-, Triazin-, Pyrol-, Pyrollidin-, Furan-, Thiophen-, Benzoxazol-, Benzthiazol- und Triazolverbindungen.

Beispiele für aromatische Tenside sind:
b1) Phenole, Phenyl-(C₁-C₄)alkyl-ether oder (poly)alkoxylierte Phenole [= Phenol-(poly)alkylenglykolether], beispielsweise mit 1 bis 50 Alkylenoxy-Einheiten im (Poly)alkylenoxyteil, wobei der Alkylenteil vorzugsweise jeweils 1 bis 4 C-Atome aufweist, vorzugsweise mit 3 bis 10 mol Alkylenoxid umgesetztes Phenol,
b2) (Poly)alkylphenole oder (Poly)alkylphenolalkoxylate [= Polyalkylphenol-(poly)alkylenglykolether], beispielsweise mit 1 bis 12 C-Atomen pro Alkylrest und 1 bis 150 Alkylenoxy-Einheiten im Polyalkylenoxyteil, vorzugsweise mit 1 bis 50 mol Ethylenoxid umgesetztes Tri-n-butylphenol oder Triisobutylphenol,
b3) Polyarylphenole oder Polyarylphenolalkoxylate [= Polyarylphenol-(poly)alkylenglykolether], beispielsweise Tristyrylphenolpolyalkylenglykolether mit 1 bis 150 Alkylenoxy-Einheiten im Polyalkylenoxyteil, vorzugsweise mit 1 bis 50 mol Ethylenoxid umgesetztes Tristyrylphenol,
b4) Verbindungen, die formal die Umsetzungsprodukte der unter b1) bis b3) beschriebenen Moleküle mit Schwefelsäure oder Phosphorsäure darstellen und deren mit geeigneten Basen neutralisierte Salze, beispielsweise der saure Phosphorsäureester des dreifach ethoxylierten Phenols, der saure Phosphorsäureester eines mit 9 mol Ethylenoxid umgesetzten Nonylphenols und der mit Triethanolamin neutralisierte Phosphorsäureester des Reaktionsproduktes von 20 mol Ethylenoxid und 1 mol Tristyrylphenol, sowie
b5) saure und mit geeigneten Basen neutralisierte (Poly)alkyl- und (Poly)arylbenzolsulfonate, beispielsweise mit 1 bis 12 C-Atomen pro Alkylrest bzw. mit bis zu 3 Styroleinheiten im Polyarylrest, vorzugsweise (lineare) Dodecylbenzolsulfonsäure und deren öl-lösliche Salze wie beispielsweise das Isopropylammoniumsalz der Dodecylbenzoisuifonsäure.

Bei den Alkylenoxy-einheiten sind Ethylenoxy-, Propylenoxy- und Butylenoxyeinheiten, insbesondere Ethylenoxyeinheiten bevorzugt. Bevorzugte Tenside aus der Gruppe der Tenside auf Aromatenbasis sind insbesondere beispielsweise mit 4 bis 10 mol Ethylenoxid umgesetztes Phenol, kommerziell beispielsweise in Form der Agrisol® -Marken (Akcros) erhältlich, mit 4 bis 50 mol Ethylenoxid umgesetztes Triisobutylphenol, kommerziell beispielsweise in Form der Sapogenat® T-Marken (Clariant) erhältlich, mit 4 bis 50 mol Ethylenoxid umgesetztes Nonylphenol, kommerziell beispielsweise in Form der Arkopal® -Marken (Clariant) erhältlich, mit 4 bis 150 mol Ethylenoxid umgesetztes Tristyrylphenol, beispielsweise Soprophor® CY/8 (Rhodia) und saures (lineares) Dodecylbenzolsulfonat, kommerziell beispielsweise in Form der Marlon® -Marken (Hüls) erhältlich.

Beispiele für nichtaromatische Tenside sind nachfolgend aufgeführt, worin EO=Ethylenoxid-Einheiten, PO=Propylenoxid-Einheiten und BO=Butylenoxid-Einheiten bedeutet:
b6) Fettalkohole mit 10 - 24 Kohlenstoffatomen mit 0-60 EO und/oder 0-20 PO und/oder 0-15 BO in beliebiger Reihenfolge. Die terminalen Hydroxygruppen dieser Verbindungen können durch einen Alkyl-,Cycloalkyl-oder Acylrest mit 1-24 Kohlenstoffatomen endgruppenverschlossen sein. Beispiele für derartige Verbindungen sind:
   Genapol® C-,L-,O-,T-,UD-,UDD-,X-Marken von Clariant, Plurafac® - und Lutensol® A-,AT-,ON-,TO-Marken von BASF, Marlipal® 24- und O13 Marken von Condea, Dehypon® -Marken von Henkel, Ethylan® -Marken von Akzo-Nobel wie Ethylan CD 120 oder Synperonic® -Marken von Unichem, z.B. Synperonic® A7.
   b7) Anionische Derivate der unter b6) beschriebenen Produkte in Form von Ethercarboxylaten, Sulfonaten, Sulfaten und Phosphaten und deren anorganischen (z.B Alkali und Erdalkali) und organischen Salzen (z.B. auf Amin- oder Alkanolaminbasis) wie Genapol® LRO, Sandopan® -Marken, Hostaphat/Hordaphos® -Marken von Clariant.
      Copolymere bestehend aus EO,PO und/oder BO Einheiten wie z.B. Blockcopolymere wie die Pluronic® -Marken von der BASF und die Synperonic® -Marken von Uniquema mit einem Molekulargewicht von 400 bis 10⁸.
      Alkylenoxydaddukte von C₁- C₉ Alkoholen wie Atlox® 5000 von Uniquema oder Hoe® -S3510 von Clariant.
      Anionische Derivate der unter b8) und b9) beschriebenen Produkte in Form von Ethercarboxylaten, Sulfonaten, Sulfaten und Phosphaten und deren anorganischen (z.B Alkali und Erdalkali) und organischen Salzen (z.B. auf Amin- oder Alkanolaminbasis).
   b8) Fettsäure- und Triglyceridalkoxylate wie die Serdox® NOG-Marken von Condea oder die Emulsogen® -Marken von Clariant, Salze von aliphatischen, cycloaliphatischen und olefinischen Carbonsäuren und Polycarbonsäuren, sowie Alpha-Sulfofettsäureester wie von Henkel erhältlich.
   b9) Fettsäureamidalkoxylate wie die Comperlan® -Marken von Henkel oder die Amam® -Marken von Rhodia.
      Alkylenoxydaddukte von Alkindiolen wie die Surfynol® -Marken von Air Products. Zuckerderivate wie Amino- und Amidozucker von Clariant,Glukitole von Clariant, Alkylpolyglycoside in Form der APG® -Marken von Henkel oder wie Sorbitanester in Form der Span® - oder Tween® -Marken von Uniquema oder Cyclodextrinester oder -ether von Wacker.
   b10) Oberflächenaktive Cellulose- und Algin-, Pektin- und Guarderivate wie die Tylose® -Marken von Clariant,die Manutex® -Marken von Kelco und Guarderivate von Cesalpina.
      Alkylenoxydaddukte auf Polyolbasis wie Polyglykol® -Marken von Clariant. Grenzflächenaktive Polyglyceride und deren Derivate von Clariant.
   b11) Sulfosuccinate , Alkansulfonate, Paraffin- und Olefinsulfonate wie Netzer IS® , Hoe® S1728, Hostapur® OS, Hostapur® SAS von Clariant, Triton® GR7ME und GR5 von Union Carbide, Empimin® -Marken von Albright und Wilson, Marlon®⁻PS65 von Condea.
   b12) Sulfosuccinamate wie die Aerosol® -Marken von Cytec oder die Empimin®⁻Marken von Albright und Wilson.
   b13) Alkylenoxidaddukte von Fettaminen, quartäre Ammonium-Verbindungen mit 8 bis 22 Kohlenstoffatomen (C₈-C₂₂) wie z.B. die Genamin® C,L,O,T-Marken von Clariant.
   b14) Oberflächenaktive, zwitterionische Verbindungen wie Tauride, Betaine und Sulfobetaine in Form von Tegotain® -Marken von Goldschmidt, Hostapon® T- und Arkopon® T-Marken von Clariant.
   b15) Per- oder polyfluorierte oberflächenaktive Verbindungen wie Fluowet® -Marken von Clariant, die Bayowet® -Marken von Bayer, die Zonyl® -Marken von DuPont und Produkte dieser Art von Daikin und Asahi Glass.
   b16) Grenzflächenaktive Sulfonamide z.B. von Bayer.
   b17) Grenzflächenaktive Polyacryl- und -methacrylderivate wie die Sokalan®⁻Marken von der BASF.
   b18) Oberflächenaktive Polyamide wie modifizierte Gelatine oder derivatisierte Polyasparginsäure von Bayer und deren Derivate.
   b19) Oberflächenaktive Polymere auf Basis von Maleinsäureanhydrid und/oder Umsetzungsprodukten von Maleinsäureanhydrid, sowie Maleinsäureanhydrid und/oder Umsetzungsprodukte von Maleinsäureanhydrid beinhaltende Copolymere wie die Agrimer® -VEMA-Marken von ISP.
   b20) Oberfächenaktive Derivate von Montan-, Polyethylen-, und Polypropylenwachsen wie die Hoechst® -wachse oder die Licowet® -Marken von Clariant.
   b21) Oberflächenaktive Phosphonate und Phosphinate wie Fluowet® -PL von Clariant.
   b22) Poly- oder perhalogenierte Tenside wie beispielsweise Emulsogen® -1557 von Clariant.

Die in den erfindungsgemäß verwendeten herbiziden Mitteln optional enthaltenen Tenside b) sind vorzugsweise vom Typ der C₈-C₂₀-Aklylpolyglykolethersulfate, vorzugsweise C₁₀-C₁₈-Alkylpolyglykolethersulfate, die vorzugsweise in Form ihrer Salze, z.B. Alkalisalze, wie Natrium- oder Kaliumsalze, und/oder Ammoniumsalze, aber auch als Erdalkalisalze wie Magnesiumsalze verwendet werden, wobei vorzugsweise 2 bis 5 Ethylenoxyeinheiten im Polyglykolteil enthalten sind. Besonders bevorzugt ist z.B. C₁₂/C₁₄-Fettalkoholdiglykolethersulfat-Natrium (Handelsname z.B. Genapol ® LRO, Clariant GmbH).

Unter einem Humectant im Sinne der vorliegenden Erfindung wird eine Verbindung verstanden, welche in der Lage ist Wasser physikalisch aufzunehmen und/oder Wasser zu speichern. Bevorzugte Humectants sind z.B. hygroskopische Verbindungen.

Als optionales Humectant c) können in den erfindungsgemäß verwendeten herbiziden Mitteln z.B. folgende Stoffe enthalten sein:
Mg SO₄, mehrwertige Alkohole wie Ethylenglykol, Propylenglykol, Butandiol, Glycerin und Pentaerythrid, sowie deren Ether und Ester, z.B. Ethylen, Glykolether, Propylenglykolether oder Glycerinester;
Polyalkylenglykole wie Polyethylenglykole (vorzugsweise mit einem Molekulargewicht von 500 - 60.000), Polypropylenglykole (vorzugsweise mit einem Molekulargewicht von 600 - 75.000) und Ethylenoxid (EO) - Propylenoxid (PO) - Mischpolymerisate z.B. mit EO-PO-, EO-PO-EO- oder PO-EO-PO-Einheiten; Zucker wie Hexosen, Pentosen, Molasse, Alkylpolysaccharide und Xanthane, z.B. die Malitol® -Marken von Salim Oleo Chemicals wie Maltitol® 75; Gelatine; Cellulosederivate wie wasserlösliche Ligninsulfonate oder Hydroxycellulosen; Zitronensäure und Zitronensäurederivate wie Zitronensäuresalze, z.B. Alkali-, Erdalkali- oder Ammoniumzitronensäuresalze wie Na-Citrat; Milchsäure und Milchsäurederivate wie Milchsäuresalze, z.B. Alkali-, Erdalkali- oder Ammoniummilchsäuresalze wie Na-Lactat z.B. in Form ihrer Racemate (DL) oder der einzelnen optischen Isomere z.B. D-Na-Lactat und L-Na-Lactat; Weinsäure und Weinsäurederivate wie Weinsäuresalze, z.B. Alkali-, Erdalkali- oder Ammoniumweinsäuresalze wie Na-Tartrat, z.B. in Form ihrer Racemate (Traubensäure) oder der einzelnen optischen Isomere, z.B. (+)-Na-Tartrat und (-)-Na-Tartrat; Asparaginsäure und Asparaginsäurederivate wie Asparaginsäuresalze, z.B. Alkali-, Erdalkali- oder Ammoniumasparaginsäuresalze wie Na-Asparagat, z.B. in Form ihrer Racemate (DL) oder der einzelnen optischen Isomere, z.B. D-Na-Asparagat und L-Na-Asparagat; Succinate wie die Triton® -Marken von Rohm und Haas; Polyvinylverbindungen wie modifiziertes Polyvinylpyrrolidon wie die Luviskol®⁻Marken von BASF und die Agrimer® -Marken von ISP oder die derivatisierten Polyvinylacetate wie die Mowilith® -Marken von Clariant oder die Polyvinylbutyrate wie die Lutonal® -Marken von der BASF, die Vinnapas® - und die Pioloform® -Marken von Wacker oder die modifizierten Polyvinylalkohole wie die Mowiol® -Marken von Clariant. Bevorzugte Humectants sind mehrwertige Alkohole wie Ethylenglykol oder Propylenglykol sowie Milchsäure und Milchsäurederivate wie Milchsäuresalze, z.B. Alkali-, Erdalkali- oder Ammoniummilchsäuresalze wie Na-Lactat z.B. in Form ihrer Racemate (DL) oder der einzelnen optischen Isomere z.B. D-Na-Lactat und L-Na-Lactat.

Üblicherweise enthalten die erfindungsgemäß verwendeten herbiziden Mittel
a) 0,0001 bis 99 Gew.-%, vorzugsweise 0,1 bis 95 Gew.-%, eines oder mehrerer herbizider Wirkstoffe,
b) optional 0,1 bis 97 Gew.-% eines oder mehrerer von Silikontensiden verschiedener Tenside, und
c) optional 0,1 bis 90 Gew.-% eines oder mehrerer Humectants.

Die erfindungsgemäß verwendeten herbiziden Mittel zeigen ausgezeichnete herbizide Wirkung. Aufgrund der verbesserten Kontrolle der Schadpflanzen durch die erfindungsgemäßen herbiziden Mittel wird es möglich, die Aufwandmenge zu senken und/oder die Sicherheitsmarge zu erhöhen. Beides ist sowohl ökonomisch als auch ökologisch sinnvoll.

In bevorzugter Ausführungsform kennzeichnen sich erfindungsgemäße verwendete herbizide Mittel dadurch, daß sie einen synergistisch wirksamen Gehalt einer Kombination der Herbizide a) mit Tensiden b) und Humectants c) aufweisen. Dabei ist vor allem hervorzuheben, daß selbst in Kombinationen mit Aufwandmengen oder Gewichtsverhältnissen von a) : b): c) bei denen ein Synergismus nicht in jedem Falle ohne weiteres nachzuweisen ist - etwa weil die Einzelverbindungen üblicherweise in der Kombination in sehr unterschiedlichen Aufwandmengen eingesetzt werden oder auch weil die Kontrolle der Schadpflanzen bereits durch die Einzelverbindungen sehr gut ist - den herbiziden Mitteln der Erfindung in der Regel eine synergistische Wirkung inhärent ist.

Die Herstellung der erfindungsgemäß verwendeten herbiziden Mittel erfolgt durch übliche Verfahren, z.B. Mahlen, Mischen, Lösen oder Dispergieren der Einzelkomponenten.

Die Komponenten a), b) und c) der erfindungsgemäß verwendeten herbiziden Mittel können zusammen in einer Fertigformulierung enthalten sein, die dann in üblicher Weise, z.B. im Form einer Spritzbrühe appliziert werden kann oder sie können separat formuliert werden und z.B. im Tank-Misch-Verfahren oder nacheinander appliziert werden. Wenn die Komponenten separat formuliert werden, können die Komponenten a), b) und c) z.B. jeweils einzeln formuliert werden oder die Komponenten a) und b), a) und c) oder b) und c) können gemeinsam formuliert werden und die jeweilige Drittkomponente wird separat formuliert.
Die erfindungsgemäßen herbiziden Mittel können auf verschiedene Art formuliert werden, je nachdem welche biologischen und/oder chemisch-physikalischen Parameter vorgegeben sind. Als Formulierungsmöglichkeiten kommen beispielsweise in Frage: Spritzpulver (WP), wasserlösliche Pulver (SP), wasserlösliche Konzentrate, emulgierbare Konzentrate (EC), Emulsionen (EW), wie Öl-in-Wasser- und Wasser-in-Öl-Emulsionen, versprühbare Lösungen, Suspensionskonzentrate (SC), Dispersionen auf Öl- oder Wasserbasis, ölmischbare Lösungen, Kapselsuspensionen (CS), Stäubemittel (DP), Beizmittel, Granulate für die Streu- und Bodenapplikation, Granulate (GR) in Form von Mikro-, Sprüh-, Aufzugs- und Adsorptionsgranulaten, wasserdispergierbare Granulate (WG), wasserlösliche Granulate (SG), ULV-Formulierungen, Mikrokapseln und Wachse. Diese einzelnen Formulierungstypen sind im Prinzip bekannt und werden beispielsweise beschrieben in: Winnacker-Küchler, "Chemische Technologie", Band 7, C. Hauser Verlag München, 4. Aufl. 1986, Wade van Valkenburg, "Pesticide Formulations", Marcel Dekker, N.Y., 1973; K. Martens, "Spray Drying" Handbook, 3rd Ed. 1979, G. Goodwin Ltd. London.

Die notwendigen Formulierungshilfsmittel wie Inertmaterialien, Tenside, Lösungsmittel und weitere Zusatzstoffe sind ebenfalls bekannt und werden beispielsweise beschrieben in: Watkins, "Handbook of Insecticide Dust Diluents and Carriers", 2nd Ed., Darland Books, Caldwell N.J., H.v. Olphen, "Introduction to Clay Colloid Chemistry"; 2nd Ed., J. Wiley & Sons, N.Y.; C. Marsden, "Solvents Guide"; 2nd Ed., Interscience, N.Y. 1963; McCutcheon's "Detergents and Emulsifiers Annual", MC Publ. Corp., Ridgewood N.J.; Sisley and Wood, "Encyclopedia of Surface Active Agents", Chem. Publ. Co. Inc., N.Y. 1964; Schönfeldt, "Grenzflächenaktive Äthylenoxidaddukte", Wiss. Verlagsgesell., Stuttgart 1976; Winnacker-Küchler, "Chemische Technologie", Band 7, C. Hauser Verlag München, 4. Aufl. 1986.

Auf der Basis dieser Formulierungen lassen sich auch Kombinationen mit anderen agrochemischen Wirkstoffen wie Insektiziden, Akariziden, Herbiziden, Fungiziden, Safenern, Düngemitteln und/oder Wachstumsregulatoren herstellen, z.B. in Form einer Fertigformulierung oder als Tankmix.

Spritzpulver sind in Wasser gleichmäßig dispergierbare Präparate, die neben dem Herbizid a) und / oder Tensid b) und / oder Humectant c) noch Verdünnungs- oder Inertstoffe und gegebenenfalls noch weitere Tenside ionischer und/oder nichtionischer Art (Netzmittel, Dispergiermittel) z.B. polyoxyethylierte Alkylphenole, polyoxethylierte Fettalkohole, polyoxethylierte Fettamine, Fettalkoholpolyglykolethersulfate, Alkansulfonate, Alkylbenzolsulfonate, ligninsulfonsaures Natrium, 2,2'-dinaphthylmethan-6,6'-disulfonsaures Natrium, dibutylnaphthalin-sulfonsaures Natrium oder auch oleoylmethyltaurinsaures Natrium enthalten. Zur Herstellung der Spritzpulver werden die Herbizide a) und/oder Tenside b) und/oder Humectants c) beispielsweise in üblichen Apparaturen wie Hammermühlen, Gebläsemühlen und Luftstrahlmühlen feingemahlen und gleichzeitig oder anschließend mit den Formulierungshilfsmitteln vermischt.

Emulgierbare Konzentrate werden durch Auflösen des Herbizids a) und/oder Tensids b) und/oder Humectants c) in einem organischen Lösungsmittel z.B. Butanol, Cyclohexanon, Dimethylformamid, Xylol oder auch höhersiedenden Aromaten oder Kohlenwasserstoffen oder Mischungen der organischen Lösungsmittel unter Zusatz von einem oder mehreren Tensiden ionischer und/oder nichtionischer Art (Emulgatoren) hergestellt. Als Emulgatoren können beispielsweise verwendet werden: Alkylarylsulfonsaure Calzium-Salze wie Ca-Dodecylbenzolsulfonat oder nichtionische Emulgatoren wie Fettsäurepolyglykolester, Alkylarylpolyglykolether, Fettalkoholpolyglykolether, Propylenoxid-Ethylenoxid-Kondensationsprodukte, Alkylpolyether, Sorbitanester wie z.B. Sorbitanfettsäureester oder Polyoxethylensorbitanester wie z.B. Polyoxyethylensorbitanfettsäureester.

Stäubemittel erhält man durch Vermahlen des Herbizids a) und/oder Tensids b) und/oder Humectants c) mit fein verteilten festen Stoffen, z.B. Talkum, natürlichen Tonen, wie Kaolin, Bentonit und Pyrophyllit, oder Diatomeenerde.

Suspensionskonzentrate können auf Wasser- oder Ölbasis sein. Sie können beispielsweise durch Naß-Vermahlung mittels handelsüblicher Perlmühlen und gegebenenfalls Zusatz von weiteren Tensiden, wie sie z.B. oben bei den anderen Formulierungstypen bereits aufgeführt sind, hergestellt werden.

Emulsionen, z.B. Öl-in-Wasser-Emulsionen (EW), lassen sich beispielsweise mittels Rührern, Kolloidmühlen und/oder statischen Mischern unter Verwendung von wäßrigen organischen Lösungsmitteln und gegebenenfalls von weiteren Tensiden, wie sie z.B. oben bei den anderen Formulierungstypen bereits aufgeführt sind, herstellen.

Granulate können entweder durch Verdüsen des Herbizids a) und/oder Tensids b) und/oder Humectants c) auf adsorptionsfähiges, granuliertes Inertmaterial hergestellt werden oder durch Aufbringen von Wirkstoffkonzentraten mittels Klebemitteln, z.B. Polyvinylalkohol, polyacrylsaurem Natrium oder auch Mineralölen, auf die Oberfläche von Trägerstoffen wie Sand, Kaolinite oder von granuliertem Inertmaterial. Auch können geeignete Herbizide a) und/oder Tensids b) und/oder Humectants c) in der für die Herstellung von Düngemittelgranulaten üblichen Weise - gewünschtenfalls in Mischung mit Düngemitteln - granuliert werden. Wasserdispergierbare Granulate werden in der Regel nach den üblichen Verfahren wie Sprühtrocknung, Wirbelbett-Granulierung, Teller-Granulierung, Mischung mit Hochgeschwindigkeitsmischern und Extrusion ohne festes Inertmaterial hergestellt. Zur Herstellung von Teller-, Fließbett-, Extruder- und Sprühgranulate siehe z.B. Verfahren in "Spray-Drying Handbook" 3rd ed. 1979, G. Goodwin Ltd., London; J.E.

Browning, "Agglomeration", Chemical and Engineering 1967, Seiten 147 ff; "Perry's Chemical Engineer's Handbook", 5th Ed., McGraw-Hill, New York 1973, S. 8-57.

Für weitere Einzelheiten zur Formulierung von Pflanzenschutzmitteln siehe z.B. G.C. Klingman, "Weed Control as a Science", John Wiley and Sons, Inc., New York, 1961, Seiten 81-96 und J.D. Freyer, S.A. Evans, "Weed Control Handbook", 5th Ed., Blackwell Scientific Publications, Oxford, 1968, Seiten 101-103.

Daneben enthalten die genannten Wirkstofformulierungen gegebenenfalls die jeweils üblichen Zusatzstoffe wie Haft-, Netz-, Dispergier-, Emulgier-, Penetrations-, Konservierungs-, Frostschutz- und Lösungsmittel, Füll-, Träger- und Farbstoffe, Entschäumer, Verdunstungshemmer und den pH-Wert und die Viskosität beeinflussende Mittel.

Der Einsatz der erfindungsgemäß verwendeten herbiziden Mittel kann im Vor- oder im Nachauflaufverfahren erfolgen, z. B. durch Spritzung. Durch den Einsatz der erfindungsgemäßen verwendeten herbiziden Mittel kann der zur Unkrautbekämpfung notwendige Präparateaufwand wesentlich reduziert werden.

Die erfindungsgemäß zu verwendenden Herbizide a) werden in der Regel zusammen mit dem bzw. den Tensiden b) und Humectants c) oder hintereinander ausgebracht, vorzugsweise in Form einer Spritzbrühe, welche die Herbizide a), die optionalen Tenside b) und die optionalen Humectants c) in wirksamen Mengen und gegebenenfalls weitere übliche Hilfsmittel enthält. Die Spritzbrühe wird bevorzugt auf Basis von Wasser und / oder einem Öl, z.B. einem hochsiedenden Kohlenwasserstoff wie Kerosin oder Paraffin hergestellt. Dabei können die erfindungsgemäß verwendeten herbiziden Mittel als Tankmischung oder über eine "Fertig-Formulierung" realisiert werden.

In Spritzpulvern beträgt die Wirkstoffkonzentration z.B. etwa 10 bis 90 Gew.-%, der Rest zu 100 Gew.-% besteht aus üblichen Formulierungsbestandteilen. Bei emulgierbaren Konzentraten kann die Wirkstoffkonzentration etwa 1 bis 90, vorzugsweise 5 bis 80 Gew.-% betragen. Staubförmige Formulierungen enthalten 1 bis 30 Gew.-% Wirkstoff, vorzugsweise meistens 5 bis 20 Gew.-% an Wirkstoff, versprühbare Lösungen enthalten etwa 0,05 bis 80, vorzugsweise 2 bis 50 Gew.-% Wirkstoff. Bei wasserdispergierbaren Granulaten hängt der Wirkstoffgehalt zum Teil davon ab, ob die wirksame Verbindung flüssig oder fest vorliegt und welche Granulierhilfsmittel, Füllstoffe usw. verwendet werden. Bei den in Wasser dispergierbaren Granulaten liegt der Gehalt an Wirkstoff beispielsweise zwischen 1 und 95 Gew.-%, vorzugsweise zwischen 10 und 80 Gew.-%.

Der Anteil an Tensid b) in konzentrierten Formulierungen kann naturgemäß nicht beliebig erhöht werden, ohne die Stabilität der Formulierung zu beeinträchtigen. In den konzentrierten Formulierungen ist das Gewichtsverhältnis Herbizid a): Tensid b) im allgemeinen von 1000:1 bis 1:10000, vorzugsweise 200:1 bis 1:200; das Gewichtsverhältnis Herbizid a): Humectant c) ist im allgemeinen von 1000:1 bis 1:10000, vorzugsweise 200:1 bis 1:200; und das Gewichtsverhältnis Tensid b) : Humectant c) ist im allgemeinen 1000:1 bis 1:1000, vorzugsweise 200:1 bis 1:200.

Bei der Applikation ist das Gewichtsverhältnis Herbizid a): Tensid b) im allgemeinen im Bereich 1000:1 bis 1:100.000, insbesondere 200:1 bis 1:1000 in Abhängigkeit von der Wirksamkeit des jeweiligen Herbizids. Das Gewichtsverhältnis Herbizid a): Humectant c) ist bei der Applikation im allgemeinen im Bereich 1000:1 bis 1:100000, insbesondere 200:1 bis 1:200 in Abhängigkeit von der Wirksamkeit des jeweiligen Herbizids. Das Gewichtsverhältnis Tensid b): Humectant c) ist bei der Applikation im allgemeinen im Bereich von 1000:1 bis 1:1000, vorzugsweise 200:1 bis 1:200.

Bei der Applikation ist die Konzentration an Herbizid a) im allgemeinen bei 0,0001 bis 20 Gew.-%, vorzugsweise bei 0,01 bis 3 Gew.-% in dem applizierten Mittel, z.B. der Spritzbrühe bei einer Aufwandmenge von 5 bis 4000 I/ha, vorzugsweise 100 bis 600 I/ha. Die Konzentration an optionalem Tensid b) ist im allgemeinen bei 0,001 bis 5 Gew.-%, vorzugsweise 0,1 bis 2,0 Gew.-%, insbesondere 0,1 bis 0,5 Gew.-% in dem applizierten Mittel, z.B. der Spritzbrühe bei einer Aufwandmenge von 5 bis 4000 l/ha, vorzugsweise 100 bis 600 l/ha. Die Konzentration an optionalem Humectant c) ist im allgemeinen bei 0,001 bis 20 Gew.-%, vorzugsweise bei 0,01 bis 5 Gew.-% Humectant c) in dem applizierten Mittel, z.B. der Spritzbrühe bei einer Aufwandmenge von 5 bis 4000 I/ha, vorzugsweise 100 bis 600 I/ha.

Vorzugsweise enthalten die erfindungsgemäß verwendeten herbiziden Mittel neben den Komponenten a), b) und c) noch Wasser und gegebenenfalls organische Lösungsmittel und werden in Form einer wäßrigen konzentrierten Dispersion oder Emulsion formuliert oder als Tankmix in Form einer verdünnten Dispersion, Emulsion oder Lösung mit einem Verdünnungsgrad bis zu dem der gebrauchsfertigen Spritzbrühe hergestellt. Besonders bevorzugt ist ein als Tankmix hergestelltes herbizides Mittel, das zur Anwendung die bevorzugten Mengen an Herbizid a), Tensid b) und Humectant c) enthält.

Auch Mischungen oder Mischungsformulierungen mit anderen Wirkstoffen, wie z.B. Insektiziden, Akariziden, Herbiziden, Fungiziden, Safenern, Düngemitteln und/oder Wachstumsregulatoren sind gegebenenfalls möglich.

Zur Anwendung werden in handelsüblicher Form vorliegende konzentrierte Formulierungen gegebenenfalls in üblicher Weise verdünnt, Spritzpulver, emulgierbare Konzentrate, Dispersionen und wasserdispergierbare Granulate z.B. mittels Wasser. Staubförmige Zubereitungen, Sprüh- und Absorptionsgranulate, versprühbare Lösungen sowie als Tankmix hergestellte Spritzbrühen werden vor der Anwendung üblicherweise nicht mehr mit weiteren inerten Stoffen verdünnt. Allerdings kann es vorteilhaft oder notwendig sein, den Spritzbrühen weitere Mengen an Tensiden b), Humectant c) und/oder andere übliche Hilfsmittel, insbesondere selbstemulgierende Öle oder Paraffinöle zuzugeben.
Mit den äußeren Bedingungen wie Temperatur, Feuchtigkeit, Art des verwendeten Herbizids, variiert die erforderliche Aufwandmenge der Herbizide a). Sie kann innerhalb weiter Grenzen schwanken, z.B. zwischen 0,001 und 10 kg/ha oder mehr Aktivsubstanz, vorzugsweise liegt sie jedoch zwischen 0,005 und 5 kg/ha.

Die erfindungsgemäß verwendeten herbiziden Mittel, weisen eine ausgezeichnete herbizide Wirksamkeit gegen ein breites Spektrum wirtschaftlich wichtiger mono- und dikotyler Schadpflanzen auf. Auch schwer bekämpfbare perennierende Unkräuter, die aus Rhizomen, Wurzelstöcken oder anderen Dauerorganen austreiben, werden gut erfaßt. Dabei ist es gleichgültig, ob die Substanzen im Vorsaat-, Vorauflauf- oder Nachauflaufverfahren ausgebracht werden. Im einzelnen seien beispielhaft einige Vertreter der mono- und dikotylen Unkrautflora genannt, die durch die erfindungsgemäßen herbiziden Mittel kontrolliert werden können, ohne daß durch die Nennung eine Beschränkung auf bestimmte Arten erfolgen soll.

Auf der Seite der monokotylen Unkrautarten werden z.B. Avena, Lolium, Alopecurus, Phalaris, Echinochloa, Digitaria, Setaria sowie Bromusarten wie Bromus catharticus, Bromus secalinus, Bromus erectus, Bromus tectorum und Bromus japonicus und Cyperusarten aus der annuellen Gruppe und auf seiten der perennierenden Spezies Agropyron, Cynodon, Imperata sowie Sorghum und auch ausdauernde Cyperusarten gut erfaßt.

Bei dikotylen Unkrautarten erstreckt sich das Wirkungsspektrum auf Arten wie z.B. Galium, Viola, Veronica, Lamium, Stellaria, Amaranthus, Sinapis, Ipomoea, Matricaria, Abutilon und Sida auf der annuellen Seite sowie Convolvulus, Cirsium, Rumex und Artemisia bei den perennierenden Unkräutern.

Unter den spezifischen Kulturbedingungen im Reis vorkommende Schadpflanzen wie z.B. Echinochloa, Sagittaria, Alisma, Eleocharis, Scirpus und Cyperus werden von den erfindungsgemäßen Mitteln ebenfalls hervorragend bekämpft.

Werden die erfindungsgemäß verwendeten herbiziden Mittel vor dem Keimen auf die Erdoberfläche appliziert, so wird entweder das Auflaufen der Unkrautkeimlinge vollständig verhindert oder die Unkräuter wachsen bis zum Keimblattstadium heran, stellen jedoch dann ihr Wachstum ein und sterben schließlich nach Ablauf von drei bis vier Wochen vollkommen ab.

Bei Applikation der erfindungsgemäß verwendeten herbiziden Mittel auf die grünen Pflanzenteile im Nachauflaufverfahren tritt ebenfalls sehr rasch nach der Behandlung ein drastischer Wachstumsstop ein und die Unkrautpflanzen bleiben in dem zum Applikationszeitpunkt vorhandenen Wachstumsstadium stehen oder sterben nach einer gewissen Zeit ganz ab, so daß auf diese Weise eine für die Kulturpflanzen schädliche Unkrautkonkurrenz sehr früh und nachhaltig beseitigt wird.

Obgleich die erfindungsgemäß verwendeten herbiziden Mittel eine ausgezeichnete herbizide Aktivität gegenüber mono- und dikotylen Unkräutern aufweisen, werden Kulturpflanzen wirtschaftlich bedeutender Kulturen z.B. zweikeimblättriger Kulturen wie Soja, Baumwolle, Raps, Zuckerrüben, insbesondere Soja, oder Gramineen-Kulturen wie Weizen, Gerste, Roggen, Reis oder Mais, nur unwesentlich oder gar nicht geschädigt. Die vorliegenden Verbindungen eignen sich aus diesen Gründen sehr gut zur selektiven Bekämpfung von unerwünschtem Pflanzenwuchs in landwirtschaftlichen Nutzpflanzungen oder in Zierpflanzungen.

Darüber hinaus weisen die erfindungsgemäß verwendeten herbiziden Mittel hervorragende wachstumsregulatorische Eigenschaften bei Kulturpflanzen auf. Sie greifen regulierend in den pflanzeneigenen Stoffwechsel ein und können damit zur gezielten Beeinflussung von Pflanzeninhaltsstoffen und zur Ernteerleichterung wie z.B. durch Auslösen von Desikkation und Wuchsstauchung eingesetzt werden. Desweiteren eignen sie sich auch zur generellen Steuerung und Hemmung von unerwünschtem vegetativen Wachstum, ohne dabei die Pflanzen abzutöten. Eine Hemmung des vegetativen Wachstums spielt bei vielen mono- und dikotylen Kulturen eine große Rolle, da das Lagern hierdurch verringert oder völlig verhindert werden kann.

Aufgrund ihrer herbiziden und pflanzenwachstumsregulatorischen Eigenschaften können die erfindungsgemäß verwendeten herbiziden Mittel auch zur Bekämpfung von Schadpflanzen in Kulturen von bekannten oder noch zu entwickelnden gentechnisch veränderten Pflanzen eingesetzt werden. Die transgenen Pflanzen zeichnen sich in der Regel durch besondere vorteilhafte Eigenschaften aus, beispielsweise durch Resistenzen gegenüber bestimmten Pestiziden, vor allem bestimmten Herbiziden, Resistenzen gegenüber Pflanzenkrankheiten oder Erregern von Pflanzenkrankheiten wie bestimmten Insekten oder Mikroorganismen wie Pilzen, Bakterien oder Viren. Andere besondere Eigenschaften betreffen z. B. das Erntegut hinsichtlich Menge, Qualität, Lagerfähigkeit, Zusammensetzung und spezieller Inhaltsstoffe. So sind transgene Pflanzen mit erhöhtem Stärkegehalt oder veränderter Qualität der Stärke oder solche mit anderer Fettsäurezusammensetzung des Ernteguts bekannt.

Bevorzugt ist die Anwendung der erfindungsgemäß verwendeten Mittel in wirtschaftlich bedeutenden transgenen Kulturen von Nutz- und Zierpflanzen, z. B. von Gramineen-Kulturen wie Weizen, Gerste, Roggen, Hafer, Hirse, Reis und Mais oder auch Kulturen von Zuckerrübe, Baumwolle, Soja, Raps, Kartoffel, Tomate, Erbse und anderen Gemüsesorten. Vorzugsweise können die erfindungsgemäßen Mittel als Herbizide in Nutzpflanzenkulturen eingesetzt werden, welche gegenüber den phytotoxischen Wirkungen der Herbizide resistent sind bzw. gentechnisch resistent gemacht worden sind.

Bei der Anwendung der erfindungsgemäß verwendeten herbiziden Mittel in transgenen Kulturen treten neben den in anderen Kulturen zu beobachtenden Wirkungen gegenüber Schadpflanzen oftmals Wirkungen auf, die für die Applikation in der jeweiligen transgenen Kultur spezifisch sind, beispielsweise ein verändertes oder speziell erweitertes Unkrautspektrum, das bekämpft werden kann, veränderte Aufwandmengen, die für die Applikation eingesetzt werden können, vorzugsweise gute Kombinierbarkeit mit den Herbiziden, gegenüber denen die transgene Kultur resistent ist, sowie Beeinflussung von Wuchs und Ertrag der transgenen Kulturpflanzen.

Gegenstand der Erfindung ist somit auch die Verwendung der erfindungsgemäßen Mittel als Herbizide zur Bekämpfung von Bromuspflanzen in Pflanzenkulturen, wobei die Pflanzenkulturen auch transgene Pflanzenkulturen sein können.

Die erfindungsgemäß verwendeten herbiziden Mittel können auch nicht-selektiv zur Bekämpfung unerwünschten Pflanzenwuchses eingesetzt werden, z.B. in Plantagenkulturen, an Wegrändern, Plätzen, Industrieanlagen oder Eisenbahnanlagen.

Aufgrund der relativ geringen Aufwandmenge der erfindungsgemäß verwendeten herbiziden Mittel ist deren Verträglichkeit in aller Regel schon sehr gut. Insbesondere wird durch die erfindungsgemäßen Kombinationen eine Senkung der absoluten Aufwandmenge erreicht, verglichen mit der Einzelanwendung eines herbiziden Wirkstoffs.

Gegenstand der Erfindung ist deshalb auch ein Verfahren zur Bekämpfung von Bromuspflanzen, vorzugsweise zur selektiven Bekämpfung von Bromuspflanzen in Nutzpflanzenkulturen, dadurch gekennzeichnet, daß man eine herbizid wirksame Menge der genannten Herbizide a), optional in Kombination mit mindestens einem der Tenside b) und mindestens einem Humectant c) appliziert, z.B. im Vorauflauf, Nachauflauf oder im Vor- und Nachauflauf, vorzugsweise im Vorauflauf, zusammen oder hintereinander, auf die Pflanzen, Pflanzenteile, Pflanzensamen oder die Fläche auf der die Pflanzen wachsen, z.B. die Anbaufläche.

In bevorzugter Verfahrensvariante werden die Herbizide a) in Aufwandmengen von 0,1 bis 2000 g Aktivsubstanz/ha, bevorzugt von 0,5 bis 1000 g Aktivsubstanz/ha ausgebracht. Weiterhin besonders bevorzugt ist die Ausbringung der Wirkstoffe in Form einer Fertigformulierung oder in Form von Tankmischungen, wobei die Einzelkomponenten, z.B. in Form von Formulierungen, gemeinsam im Tank mit Wasser gemischt werden und die erhaltene Spritzbrühe ausgebracht wird.

Da die Kulturpflanzenverträglichkeit der erfindungsgemäß verwendeten Kombinationen bei gleichzeitig sehr hoher Kontrolle der Schadpflanzen ausgesprochen gut ist, können diese als selektiv angesehen werden. In bevorzugter Verfahrensabwandlung werden herbizide Mittel mit den erfindungsgemäßen Wirkstoffkombinationen daher zur selektiven Bekämpfung unerwünschter Pflanzen eingesetzt.

Um die Verträglichkeit und/oder Selektivität der erfindungsgemäß verwendeten herbiziden Mittel gewünschtenfalls noch zu steigern kann es von Vorteil sein, diese gemeinsam in Mischung oder zeitlich - getrennt nacheinander zusammen mit Safenern oder Antidots anzuwenden.

Als Safener oder Antidots für die erfindungsgemäßen herbiziden Mittel in Frage kommende Verbindungen sind z. B. aus EP-A-333 131 (ZA-89/1960), EP-A-269 806 (US-A-4,891,057), EP-A-346 620 (AU-A-89/34951) und den internationalen Patentanmeldungen PCT/EP 90/01966 (WO-91108202) und PCT/EP 90102020 (WO-911078474) und dort zitierter Literatur bekannt oder können nach den dort beschriebenen Verfahren hergestellt werden. Weitere geeignete Safener kennt man aus EP-A-94 349 (US-A-4,902,304), EP-A-191 736 (US-A-4,881,966) und EP-A-0 492 366 und der dort zitierten Literatur.

In einer bevorzugten Ausführungsform enthalten die herbiziden Mittel der vorliegenden Erfindung daher einen zusätzlichen Gehalt an einer oder mehrerer Verbindungen, die als Safener oder Antidots wirken.

Besonders bevorzugte Antidots oder Safener oder Gruppen von Verbindungen die sich als Safener oder Antidots für die oben beschriebenen herbiziden Mittel der Erfindung eignen sind unter anderem:
a) Verbindungen vom Typ der Dichlorphenylpyrazolin-3-carbonsäure, vorzugsweise Verbindungen wie 1-(2,4-Dichlorphenyl)-5-(ethoxycarbonyl)-5-methyl-2-pyrazolin-3-carbonsäureethylester (Verbindung S1 -1, Mefenpyr-diethyl) und verwandte Verbindungen, wie sie in der internationalen Anmeldung WO 91/07874 (PCT/EP 90102020) beschrieben sind;
b) Derivate der Dichlorphenylpyrazolcarbonsäure, vorzugsweise Verbindungen wie 1-(2,4-Dichlorphenyl)-5-methyl-pyrazol-3-carbonsäureethylester (Verbindung S1-2), 1-(2,4-Dichlorphenyl)-5-isopropyl-pyrazol-3-carbonsäureethylester (Verbindung S1 -3), 1-(2,4-Dichlorphenyl)-5-(1,1-dimethyl-ethyl)pyrazol-3-carbonsäureethylester (Verbindung S1-4), 1-(2,4-Dichlorphenyl)-5-phenylpyrazol-3-carbonsäureethylester (Verbindung S1-5) und verwandte Verbindungen, wie sie in EP-A-0 333 131 und EP-A-0 269 806 beschrieben sind;
c) Verbindungen vom Typ der Triazolcarbonsäuren, vorzugsweise Verbindungen wie 1-(2,4-Dichlorphenyl)-5-trichlormethyl-(1H)-1,2,4-triazol-3-carbonsäureethylester (Verbindung S1-6, Fenchlorazol) und verwandte Verbindungen (siehe EP-A-0 174 562 und EP-A-0 346 620);
d) Verbindungen vom Typ der Dichlorbenzyl-2-isoxazolin-3-carbonsäure, Verbindungen vom Typ der 5-Benzyl- oder 5-Phenyl-2-isoxazolin-3-carbonsäure, vorzugsweise Verbindungen wie 5-(2,4-Dichlorbenzyl)-2-isoxazolin-3-carbonsäureethylester (Verbindung S1 -7) oder 5-Phenyl-2-isoxazolin-3-carbonsäureethylester (Verbindung S1-8) und verwandte Verbindungen wie sie in der internationalen Patentanmeldung WO 91/08202 (PCT/EP 90/01966) beschrieben sind;
e) Verbindungen vom Typ der 8-Chinolinoxyessigsäure, vorzugsweise Verbindungen wie (5-Chlor-8-chinolinoxy)-essigsäure-(1 -methyl-hex-1 -yl)-ester (S2-1; Cloquintocet-mexyl),
   (5-Chlor-8-chinolinoxy)-essigsäure-(1,3-dimethyl-but-1-yl)- ester (S2-2),
   (5-Chlor-8-chinolinoxy)-essigsäure-4-allyl-oxy-butylester (S2-3),
   (5-Chlor-8-chinolinoxy)-essigsäure-1 -allyl-oxy-prop-2-ylester (S2-4),
   (5-Chlor-8-chinolinoxy)-essigsäureethylester (S2-5),
   (5-Chlor-8-chinolinoxy)-essigsäuremethylester (S2-6),
   (5-Chlor-8-chinolinoxy)-essigsäureallylester (S2-7),
   (5-Chlor-8-chinolinoxy)-essigsäure-2-(2-propyliden-iminoxy)-1-ethylester
   (S2-8), (5-Chlor-8-chinolinoxy)-essigsäure-2-oxo-prop-1 -ylester (S2-9) und
   verwandte Verbindungen wie sie in EP-A-0 086 750, EP-A-0 094 349 und
   EP-A-0 191 736 oder EP-A-0 492 366 beschrieben sind;
f) Verbindungen vom Typ der (5-Chlor-8-chinolinoxy)-malonsäure, vorzugsweise Verbindungen wie (5-Chlor-8-chinolinoxy)-malonsäurediethylester, (5-Chlor-8-chinolinoxy)-malonsäurediallylester, (5-Chlor-8-chinolinoxy)-malonsäuremethylethylester und verwandte Verbindungen wie sie in der deutschen Patentanmeldung EP-A-0 582 198 beschrieben und vorgeschlagen worden sind;
g) Wirkstoffe vom Typ der Phenoxyessig- bzw. -propionsäurederivate bzw. der aromatischen Carbonsäuren, wie z. B. 2,4-Dichlorphenoxyessigsäure(ester) (2,4-D), 4-Chlor-2-methyl-phenoxy-propionsäure (Mecoprop), MCPA oder 3,6-Dichlor-2-methoxy-benzoesäure(ester) (Dicamba).
h) Verbindungen vom Typ der 5,5-Diphenyl-2-isoxazolin-3-carbonsäure, vorzugsweise 5,5-Diphenyl-2-isoxazolin-3-carbonsäureethylester (S3-1, Isoxadifen-ethyl).
i) Verbindungen, die als Safener z.B. für Reis bekannt sind wie Fenclorim (= 4,6-Dichlor-2-phenylpyrimidin, Pesticide Manual, 11. Auflage, 1997, S. 511-512), Dimepiperate (= Piperidin-1 -thiocarbonsäure-S-1 -methyl-1 -phenylethylester, Pesticide Manual, 11. Auflage, 1997, S. 404-405), Daimuron (= 1 -(1 -Methyl- 1-phenylethyl)-3-p-tolyl-harnstoff, Pesticide Manual, 11. Auflage, 1997, S. 330), Cumyluron (= 3-(2-Chlorphenylmethyl)-1 -(1 -methyl-1-phenyl-ethyl)- harnstoff, JP-A-60/087254), Methoxyphenon (= 3,3'-Dimethyl-4-methoxy- benzophenon, CSB (= 1-Brom-4-(chlormethylsulfonyl)-benzol, CAS-Reg. Nr. 54091-06-4).

Die genannten Verbindungen sind außerdem zumindest teilweise in der EP-A-0 640 587 beschrieben, auf die hiermit zu Offenbarungszwecken Bezug genommen wird.
j) Eine weitere wichtige Gruppe von als Safenern und Antidoten geeignete Verbindungen ist aus der WO 95107897 bekannt.

Die Safener (Antidote) der vorstehenden Gruppen a) bis j) reduzieren oder unterbinden phytotoxische Effekte, die beim Einsatz der herbiziden Mittel gemäß der Erfindung in Nutzpflanzenkulturen auftreten können, ohne die Wirksamkeit der Herbizide gegen Schadpflanzen zu beeinträchtigen. Hierdurch kann das Einsatzgebiet der erfindungsgemäß verwendeten herbiziden Mittel erheblich erweitert werden und insbesondere ist durch die Verwendung von Safenern der Einsatz von herbiziden Mitteln möglich, die bislang nur beschränkt oder mit nicht ausreichendem Erfolg eingesetzt werden konnten, d. h. von Kombinationen, die ohne Safener in niedrigen Dosierungen mit wenig Breitenwirkung zu nicht ausreichender Kontrolle der Schadpflanzen führten.

Die Komponenten a), b) und c) der herbiziden Mittel gemäß der Erfindung und die erwähnten Safener können zusammen (z.B. als fertige Formulierung oder im Tankmisch-Verfahren) oder in beliebiger Reihenfolge nacheinander ausgebracht werden. Das Gewichtsverhältnis Safener:Herbizid (Verbindung(en) der Formel (I) und/oder ihre Salze) kann innerhalb weiter Grenzen variieren und liegt vorzugsweise im Bereich von 1 : 100 bis 100 : 1, insbesondere von 1 : 100 bis 50: 1. Die jeweils optimalen Mengen an Herbizid(en) und Safener(n) sind üblicherweise vom Typ des herbiziden Mittels und/oder vom verwendeten Safener sowie von der Art des zu behandelnden Pflanzenbestandes abhängig.

Die Safener können je nach ihren Eigenschaften zur Vorbehandlung des Saatgutes der Kulturpflanze (Beizung der Samen) verwendet werden oder vor der Saat in die Saatfurchen eingebracht oder zusammen mit der Herbizidmischung vor oder nach dem Auflaufen der Pflanzen angewendet werden.
Vorauflaufbehandlung schließt sowohl die Behandlung der Anbaufläche vor der Aussaat als auch die Behandlung der angesäten, aber noch nicht bewachsenen Anbauflächen ein. Bevorzugt ist die gemeinsame Anwendung mit der Herbizidmischung. Hierzu können Tankmischungen oder Fertigformulierungen eingesetzt werden.

Die benötigten Aufwandmengen der Safener können je nach Indikation und verwendetem Herbizid innerhalb weiter Grenzen schwanken und liegen in der Regel im Bereich von 0,001 bis 1 kg, vorzugsweise 0,005 bis 0,2 kg Wirkstoff je Hektar.

Die Ausbringung der erfindungsgemäß verwendeten herbiziden Mittel kann in üblicher Weise erfolgen, zum Beispiel mit Wasser als Träger in Spritzbrühmengen von etwa 5 bis 4000 Liter/ha. Eine Anwendung der Mittel im sog. Low-Volume- und Ultra-Low-Volume-Verfahren (ULV) ist ebenso möglich wie ihre Applikation in Form von Granulaten und Mikrogranulaten.
Eine bevorzugte Verwendung betrifft den Einsatz von herbiziden Mitteln, die Gehalte an Komponenten a), b) und c) in einer synergistisch wirksamen Menge aufweisen. Zur Erfindung gehören auch Mischungen von einem oder mehreren Herbiziden a), mit einem oder mehreren Tensiden b) und einem oder mehreren Humectants c).

Daneben können in den verwendeten herbiziden Mitteln der Erfindung zur Abrundung der Eigenschaften, meist in untergeordneten Mengen, zusätzlich eines, zwei oder mehrere von dem Herbizid a) verschiedene agrochemische Wirkstoffe (z.B. Herbizide, Insektizide, Fungizide, Safener) enthalten sein.

Damit ergeben sich zahlreiche Möglichkeiten mehrere Wirkstoffe miteinander zu kombinieren und gemeinsam zur Bekämpfung von Schadpflanzen in Pflanzenkulturen einzusetzen, ohne vom Gedanken der Erfindung abzuweichen.

So können in einer bevorzugten Ausführungsform z.B. verschiedene Wirkstoffe der Formel (II) und/oder deren Salze miteinander kombiniert werden, z.B.
Mesosulfuron-methyl + lodosulfuron-methyl,
Mesosulfuron-methyl + lodosulfuron-methyl-Natrium,
Mesosulfuron-methyl + Foramsulfuron,
Mesosulfuron-methyl + Foramsulfuron-Natrium,
Mesosulfuron-methyl-Natrium + lodosulfuron-methyl,
Mesosulfuron-methyl-Natrium + lodosulfuron-methyl-Natrium,
Mesosulfuron-methyl-Natrium + Foramsulfuron,
Mesosulfuron-methyl-Natrium + Foramsulfuron-Natrium,
Foramsulfuron + lodosulfuron-methyl,
Foramsulfuron + lodosulfuron-methyl-Natrium,
Foramsulfuron-Natrium + lodosulfuron-methyl,
Foramsulfuron-Natrium + lodosulfuron-methyl-Natrium.

Die herbiziden Wirkstoffe a) und deren Mischungen, z.B. die vorgenannten Wirkstoffmischungen von Wirkstoffen der Formel (II) und/oder deren Salze, können vorzugsweise mit einem C₈-C₂₀-Alkylpolyglykolethersulfat wie C₁₂/C₁₄₋Fettalkoholdiglykolethersulfat-Natrium (Handelsname z.B. Genapol® LRO, Clariant GmbH) als Komponente b) und einem Milchsäurederivat wie Natrium-Lactat als Komponente c) kombiniert werden. Darüber hinaus können vorzugsweise einer oder mehrere Safener enthalten sein, insbesondere die Safener Mefenpyr-diethyl (S1-1), Cloquintocet-mexyl (S2-1) und Isoxadifen-ethyl (S3-1).

Zusammenfassend kann gesagt werden, daß die erfindungsgemäß verwendeten herbiziden Mittel ausgezeichete herbizide Wirkung aufweisen, und in einer bevorzugten Ausführungsform überadditive (= synergistische) Effekte auftreten. Dabei ist die Wirkung in den Kombinationen stärker als die der eingesetzten Einzelkomponenten bei alleiniger Anwendung.

Diese Effekte erlauben unter anderem eine Reduzierung der Aufwandmenge, die Bekämpfung eines breiteren Spektrums von Unkräutern und Ungräsern, die Schließung von Wirkungslücken, eine schnellere und sicherere Wirkung, eine längere Dauerwirkung, eine komplette Kontrolle der Schadpflanzen mit nur einer oder wenigen Applikationen, und eine Ausweitung des Anwendungszeitraumes. Die genannten Eigenschaften sind in der praktischen Unkrautbekämpfung gefordert, um landwirtschaftliche Kulturen von unerwünschten Konkurrenzpflanzen freizuhalten und damit die Erträge qualitativ und quantitativ zu sichern und/oder zu erhöhen. Der technische Standard wird durch die erfindungsgemäßen Kombinationen bezüglich der beschriebenen Eigenschaften deutlich übertroffen. So zeigt sich eine wesentlich verbesserte Wirkungssicherheit unter verschiedenen Umweltbedingungen.

in einer bevorzugten Ausführungsform der vorliegenden Erfindung eignen sich herbizide Mittel, die mindestens eine Verbindung der Formel (II') und/oder deren Salze enthalten, 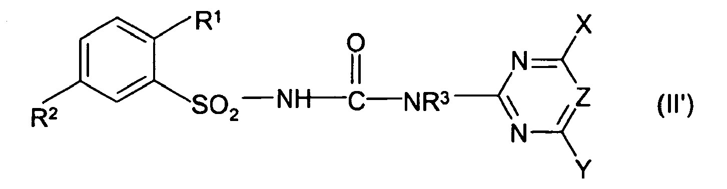 worin R¹ gleich CO-(C₁-C₄-Alkoxy) ist, R² gleich CH₂-NHR^{e} ist, worin R^{e} ein Acylrest, vorzugsweise C₁-C₄-Alkylsulfonyl ist, R³ gleich H oder C₁-C₄-Alkyl ist, und X, Y und Z wie in Formel (II) definiert sind, z.B. Mesosulfuron-methyl und/oder dessen Salze wie das Natriumsalz, hervorragend zur Kontrolle von Bromusarten wie Bromus catharticus, Bromus secalinus, Bromus erectus, Bromus tectorum und Bromus japonicus.

Bromuspflanzen werden dabei besonders effizient bei normalen Feuchtigkeitsbedingungen kontrolliert und selbst bei sehr trockenen Bedingungen ist noch eine Bromuskontrolle gegeben. Unter normalen Feuchtigkeitsbedingungen werden insbesondere solche Bedingungen verstanden, bei denen die Bromuspflanze nicht aufgrund Wassermangels zu welken beginnt. Dies ist insbesondere dann gegeben, wenn die Pflanze innerhalb der ersten 4 Wochen nach der Applikation des herbiziden Mittels so ausreichend mit Wasser versorgt wird, daß sie das durch Transpiration abgegebene Wasser aus dem Boden ersetzen kann und ein Welken verhindert wird (siehe z.B. Scheffer / Schachtschnabel: Lehrbuch der Bodenkunde, Ferdinand Enke Verlag (Stuttgart), 11. Auflage (1982), S. 171 ff.). Zur Bromuskontrolle, insbesondere bei sehr trockenen Bedingungen, ist es bevorzugt, wenn die herbiziden Mittel neben der Verbindung der Formel (II') und/oder deren Salzen zusätzlich noch ein von Silikontensiden verschiedenes Tensid b) und/oder ein Humectant c) enthalten.

Darüber hinaus können die herbiziden Mittel auch weitere agrochemische Wirkstoffe (z.B. Herbizide, Insektizide, Fungizide, Safener) enthalten. So können in einer bevorzugten Ausführungsform z.B. Wirkstoffe der Formel (II') und/oder deren Salze mit davon verschiedenen Wirkstoffen der Formel (II) und/oder deren Salzen kombiniert werden, z.B.
Mesosulfuron-methyl + lodosulfuron-methyl,
Mesosulfuron-methyl + lodosuifuron-methyl-Natrium,
Mesosulfuron-methyl + Foramsulfuron,
Mesosulfuron-methyl + Foramsulfuron-Natrium,
Mesosulfuron-methyl-Natrium + lodosulfuron-methyl,
Mesosulfuron-methyl-Natrium + lodosulfuron-methyl-Natrium,
Mesosulfuron-methyl-Natrium + Foramsulfuron,
Mesosulfuron-methyl-Natrium + Foramsulfuron-Natrium,
Foramsulfuron + lodosulfuron-methyl,
Foramsulfuron + lodosulfuron-methyl-Natrium,
Foramsulfuron-Natrium + lodosulfuron-methyl,
Foramsulfuron-Natrium + lodosulfuron-methyl-Natrium.

Die herbiziden Wirkstoffe der Formel (II') und/oder deren Salze und deren Mischungen, z.B. die vorgenannten Wirkstoffmischungen von Wirkstoffen der Formel (II') und/oder deren Salzen mit davon verschiedenen Wirkstoffen der Formel (II) und/oder deren Salzen, können vorzugsweise mit einem C₈-C₂₀₋Alkylpolyglykolethersulfat wie C₁₂/C₁₄-Fettalkoholdiglykolethersulfat-Natrium (Handelsname z.B. Genapol® LRO, Clariant GmbH) als Komponente b) und/oder einem Milchsäurederivat wie Natrium-Lactat als Komponente c) kombiniert werden. Darüber hinaus können vorzugsweise einer oder mehrere Safener enthalten sein, insbesondere die Safener Mefenpyr-diethyl (S1-1), Cloquintocet-mexyl (S2-1) und Isoxadifen-ethyl (S3-1).
Für die herbiziden Mittel dieser bevorzugten Ausführungsform der vorliegenden Erfindung gelten entsprechend auch die oben für die herbiziden Mittel gemäß Anspruch 1 gemachten Ausführungen.

Die nachfolgenden Ausführungsbeispiele erläutern die Erfindung und haben keinerlei limitierenden Charakter.

### A. Herstellung der Spritzbrühen

Es wurde eine Wasseraufwandmenge von 300l/ha vorgelegt. Anschließend wurden die Einzelkomponenten Herbizid, Tensid und Humectant gemäß der in Tabellen 1-2 4- angegebenen Art und Aufwandmengen unter Rühren zugegeben, so daß eine homogene Spritzbrühe entstand. Mesosulfuron-methyl wurde als 20-prozentiges wasserdispergierbares Pulver eingesetzt.
Als Tenside wurden Genapol® LRO als 70-prozentige Paste (Clariant) sowie Synperonic® A7 (Unichema) verwendet.
Als Humectants kamen Na-Lactat als 50-prozentige wässrige Lösung (Merck KGaA, Darmstadt) und Propylenglycol (Clariant) zur Anwendung.
Die Spritzapplikation wurde wie im Beispielteil beschrieben durchgeführt.

### B. Biologische Beispiele

Die nachfolgend verwendeten Abkürzungen bedeuten:

| | | | |
|---|---|---|---|
| g a.i./ha | Gramm Aktivsubstanz/Hektar | | |
| BROTE | Bromus tectorum | DIGSA | Digitaria adscendens |

Die optische Bonitierung erfolgte nach einer Prozentskala von 0% = keine Schädigung bis 100% = alle Pflanzen abgestorben.

### Beispiel B.1

Samen der Schadpflanze BROTE wurden im Freiland in einem sandigem Lehmboden in 13er Rundtöpfen ausgesät und angegossen. Während der gesamten Versuchsdauer wurde das Substrat nur minimal bewässert. Vier Wochen nach der Aussaat wurden die Pflanzen auf einer Laborspritzbahn mit gemäß Beispiel A hergestellten Spritzbrühen der Komponenten Mesosulfuron-methyl (A1), Genapol® LRO und Na-Lactat, A1, Synperonic® A7 und Na-Lactat sowie A1, Genapol® LRO und Propylenglykol behandelt. Die Wasseraufwandmenge für die Spritzapplikation der Präparate betrug 300 l/ha. Nach der Behandlung wurden die Pflanzen wieder im Freiland aufgestellt. Die optische Bonitur 28 Tage nach der Applikation ergab die in Tabelle 1 aufgeführten Resultate.

**Tabelle 1 Wirkung [%] gegen Schadpflanzen**

| Komponenten | g a.i. / ha | BROTE |
|---|---|---|
| A1 | 10 | 12,5 |
| A1 | 10 | 12,5 |
| + Genapol® LRO | 300 | |
| A1 | 10 | 42,5 |
| + Genapol® LRO | 300 | |
| + Na-Lactat | 300 | |
| A1 | 10 | 10 |
| + Synperonic® A7 | 300 | |
| A1 | 10 | 17,5 |
| + Synperonic® A7 | 300 | |
| + Na-Lactat | 300 | |
| A1 | 10 | 27,5 |
| + Genapol® LRO | 300 | |
| + Propylenglykol | 300 | |

### Beispiel B.2

Samen der Schadpflanze BROTE wurden in einem Gewächshaus in einem sandigem Lehmboden in 7er Rundtöpfen ausgesät und angegossen. Es wurde eine Tagestemperatur von 22 bis 24°C und eine Nachttemperatur von 16 bis 18°C eingehalten, wobei durch eine Zusatzbeleuchtung mit Natriumdampfleuchten (ca. 7000 lux) eine einheitliche Tageslänge von 16 Stunden erreicht wurde. Die relative Luftfeuchtigkeit betrug 60 bis 80%. Zwei Wochen nach der Aussaat wurden die Pflanzen auf einer Laborspritzbahn unter Verwendung einer Öldispersion enthaltend 1,5 Gew.-% Mesosulfuron-methyl (A1) und 4,5 Gew.-% Mefenpyr-diethyl (S1-1) sowie von Kombinationen der Öldispersion enthaltend 1,5 Gew.-% Mesosulfuron-methyl und 4,5 Gew.-% Mefenpyr-diethyl mit Genapol® LRO (300 g Genapol® LRO / ha) behandelt. Die Wasseraufwandmenge für die Spritzapplikation der Präparate betrug 300 I/ha. Nach der Behandlung wurden die Pflanzen wieder im Gewächshaus aufgestellt. Die optische Bonitur 28 Tage nach der Applikation ergab die in Tabelle 2 aufgeführten Resultate.

**Tabelle 2 Wirkung [%] gegen Schadpflanzen**

| Komponenten | g a.i. /ha | BROTE |
|---|---|---|
| A1* | 7,5 | 80 |
| | 11 | 87,5 |
| A1* | 7,5 | 85 |
| + Genapol® LRO | 11 | 90 |

| | | |
|---|---|---|
| A1*: Mesosulfuron-methyl (A1) + Mefenpyr-diethyl (S1-1) | | |

## Patentansprüche

1. Verfahren zur Bekämpfung von Bromuspflanzen, worin das herbizide Mittel, definiert gemäß einem oder mehreren der Ansprüche 3 bis 5, im Vorlauf, Nachlauf oder im Vor- und Nachlauf auf die Pflanzen, Pflanzenteile, Pflanzensamen oder die Fläche auf der die Pflanzen wachsen, z.B. die Anbaufläche appliziert wird.

2. Verfahren nach Anspruch 1 zur selektiven Bekämpfung von Bramuspflanzen in Pflanzenkulturen.

3. Verwendung eines herbiziden Mittels, enthaltend mindestens eine Verbindung der Formel (II') und/oder deren Salze, 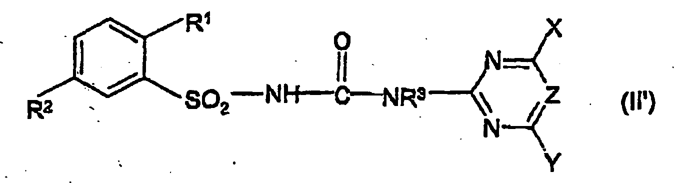
worin R¹ gleich CO-(C₁-C₄-Alkoxy) ist, R² gleich CH₂-NHR^{e} ist, worin R^{e} ein Acylrest, vorzugsweise C₁-C₄-Alkylsulfonyl ist, R³ gleich H oder C₁-C₄-Alkyl ist,
X und Y unabhängig voneinander gleich oder verschieden C₁-C₆-Alkyl, C₁-C₆-Alkoxy oder C₁-C₆-Alkylthio sind, wobei jeder der drei genannten Reste unsubstituiert oder durch einen oder mehrere Reste aus der Gruppe Halogen, C₁-C₄-Alkoxy und C₁-C₄-Alkylthio substituiert ist, oder C₃-C₆-Cycloalkyl, C₂-C₆-Alkenyl, C₂-C₆-Alkynyl, C₃-C₆-Alkenyloxy oder C₃-C₆-Alkynyloxy sind, vorzugsweise C₁-C₄-Alkyl oder C₁-C₄-Alkoxy, und
Z gleich CH oder N ist,
zur Bekämpfung von Bromuspflanzen.

4. Verwendung gemäß Anspruch 3, worin das herbizide Mittel zusätzlich b) eines oder mehrere von Silikontensiden verschiedene Tenside und/oder c) eines oder mehrere Humectants enthält.

5. Verwendung gemäß Anspruch 3 oder 4, worin das herbizide Mittel zusätzlich einen oder mehrere weitere agrochemische Wirkstoffe enthält.

## Claims

1. A method of controlling Bromus plants, wherein the herbicidal composition defined as in one or more of claims 3 to 5 is applied pre-emergence, post-emergence or pre- and post-emergence to the plants, plant parts, plant seeds or the area on which the plants grow, for example the area under cultivation.

2. A method according to claim 1 for selectively controlling Bromus plants in plant crops.

3. The use of a herbicidal composition comprising at least one compound of the formula (II') and/or its salts 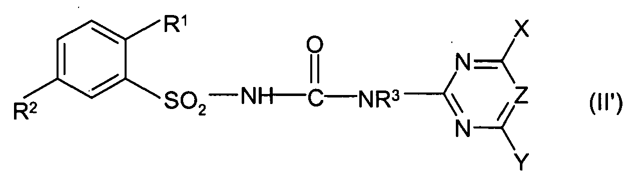 in which R¹ is CO-(C₁-C₄-alkoxy), R² is CH₂-NHR^{e}, where R^{e} is an acyl radical, preferably C₁-C₄-alkylsulfonyl, R³ is H or C₁-C₄-alkyl,
X and Y independently of one another are identical or different and are C₁₋C₆-alkyl, C₁-C₆-alkoxy or C₁-C₆-alkylthiom where each of the three abovementioned radicals is unsubstituted or substituted by one or more radicals selected from the group consisting of halogen, C₁-C₄₋alkoxy and C₁-C₄-alkylthio, or a C₃-C₆-cycloalkyl, C₂-C₆-alkenyl, C₂-C₆-alkynyl, C₃-C₆-alkenyloxy or C₃-C₆-alkynyloxy, preferably C₁₋C₄-alkyl or C₁-C₄-alkoxy, and
Z is CH or N,
for controlling Bromus plants.

4. The use as claimed in claim 3, wherein the herbicidal composition additionally comprises b) one or more surfactants other than silicone surfactants and/or c) one or more humectants.

5. The use as claimed in claim 3 or 4, wherein the herbicidal composition additionally comprises one or more further agrochemical active substances.

## Revendications

1. Procédé pour la lutte contre les bromes, dans lequel l'agent herbicide, défini selon une ou plusieurs des revendications 3 à 5, est appliqué en prélevée, en postlevée ou en prélevée et en postlevée aux plantes, aux parties de plantes, à la semence de plantes ou à la surface de croissance de plantes, par exemple la surface cultivable.

2. Procédé selon la revendication 1, pour la lutte sélective contre les bromes dans les plantes de culture.

3. Utilisation d'un agent herbicide renfermant au moins un composé de formule (II') et/ou ses sels 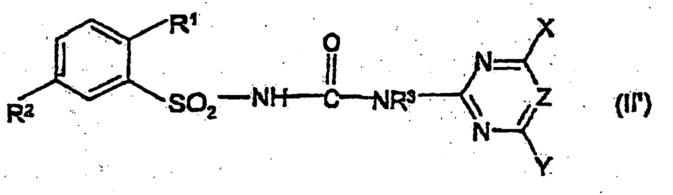 dans laquelle
R¹ représente un groupe CO-(alkoxy en C₁-C₄), R² représente un groupe CH₂-NHR^{e}, dans laquelle R^{e} représente un reste acyle, de préférence un groupe (alkyl en C₁-C₄) sulfonyle, R³ représente un atome d'hydrogène ou un groupe alkyle en C₁₋C₄,
X et Y, indépendamment l'un de l'autre, identiques ou différents, représentent un groupe alkyle en C₁₋C₆, alkoxy en C₁-C₆ ou (alkyl en C₁-C₆) thio, chacun des trois restes précités est non substitué ou substitué par un ou plusieurs restes pris dans le groupe comprenant un atome d'halogène, un groupe alkoxy en C₁-C₄ et (alkyl en C₁-C₄) thio, ou cycloalkyle en C₃-C₆, alcényle en C₂-C₆, alcynyle en C₂-C₆, alcényloxy en C₃-C₆ ou alcynyloxy en C₃-C₆, de préférence alkyle en C₁-C₄ ou alkoxy en C₁-C₄, et
Z représente un groupe CH ou N,
pour la lutte contre les bromes.

4. Utilisation selon la revendication 3, dans laquelle l'agent herbicide renferme de plus b) un ou plusieurs agents de surface différents des agents de surface siliconés et/ou c) un ou plusieurs agents humidifants.

5. Utilisation selon la revendication 3 ou 4 dans laquelle l'agent herbicide renferme de plus une ou plusieurs substances actives agrochimiques.
